# EUROPEAN PATENT SPECIFICATION

(11) **EP 4 376 480 B1**
(45) Date of publication and mention of the grant of the patent: **07.10.2026**
(21) Application number: 22846234.7
(22) Date of filing: 20.07.2022
(51) Int. Cl.: H04W 28/10, H04W 24/10, H04W 72/12, H04W 88/08, H04W 88/04, H04W 92/18

(54) **METHOD AND DEVICE FOR CONTROLLING TRAFFIC FLOW THROUGH SIDELINK RELAY IN WIRELESS COMMUNICATION SYSTEM**
VERFAHREN UND VORRICHTUNG ZUR STEUERUNG DES VERKEHRSFLUSSES DURCH SIDELINK-RELAIS IN EINEM DRAHTLOSKOMMUNIKATIONSSYSTEM
PROCÉDÉ ET DISPOSITIF DE COMMANDE DE FLUX DE TRAFIC À TRAVERS UN RELAIS DE LIAISON LATÉRALE DANS UN SYSTÈME DE COMMUNICATION SANS FIL

(30) Priority: 20.07.2021 KR 20210095177; 09.08.2021 KR 20210104897
(43) Date of publication of application: 29.05.2024
(73) Proprietor: Samsung Electronics Co., Ltd., Suwon-si, Gyeonggi-do 16677 (KR)
(72) Inventor: KANG, Hyunjeong, Suwon-si, Gyeonggi-do 16677 (KR); AGIWAL, Anil, Suwon-si, Gyeonggi-do 16677 (KR); TESANOVIC, Milos, Suwon-si, Gyeonggi-do 16677 (KR)
(74) Representative: Gulde & Partner
(86) International application number: PCT/KR2022/010646
(87) International publication number: WO 2023/003364

(56) References cited:
- WO-A1-2021/091339
- KR-A- 20210 024 099
- US-A1- 2019 014 606
- US-B2- 10 484 926
- US-B2- 10 869 329
- "3rd Generation Partnership Project; Technical Specification Group Services and System Aspects; Proximity based Services (ProSe) in the 5G System (5GS) (Release 17)", 3GPP STANDARD; TECHNICAL SPECIFICATION; 3GPP TS 23.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 4 June 2021 (2021-06-04), Mobile Competence Centre ; 650, route des Lucioles ; F-06921 Sophia-Antipolis Cedex ; France , pages 1 - 90, XP052029420

## Description

### Technical Field

The present disclosure relates to a wireless communication system. More particularly, the present disclosure relates to a method and apparatus for controlling traffic flow between a base station and a remote user equipment (UE) via a sidelink relay, such that direct communication between UEs may be supported, based on a sidelink, in a wireless communication system.

### Background Art

A 5^{th}-generation (5G) mobile communication technology defines a broad frequency band to enable a high date rate and new services, and may be implemented not only in a 'Sub 6 GHz' band including 3.5 GHz but also in an ultra high frequency band ('Above 6 GHz') called millimeter wave (mmWave) including 28 GHz, 39 GHz, and the like. Also, for a 6^{th}-generation (6G) mobile communication technology called a system beyond 5G communication (beyond 5G), in order to achieve a data rate fifty times faster than the 5G mobile communication technology and ultra-low latency one-tenth of the 5G mobile communication technology, implementation of the 6G mobile communication technology in the terahertz band (e.g., the 95 GHz to 3 THz band) is being considered.

In the early phase of the development of the 5G mobile communication technology, in order to support services and satisfy performance requirements of enhanced Mobile BroadBand (eMBB), Ultra Reliable Low Latency Communications (URLLC), and massive Machine-Type Communications (mMTC), there has been ongoing standardization about beamforming and massive multiple input multiple output (MIMO) for mitigating pathloss of radio waves and increasing transmission distances of radio wave in a mmWave band, supporting numerologies (for example, operation of multiple subcarrier spacings) for efficiently utilizing mmWave resources and dynamic operation of slot formats, initial access technologies for supporting multi-beam transmission and broadband, definition and operation of bandwidth part (BWP), new channel coding methods such as a low density parity check (LDPC) code for a large amount of data transmission and a polar code for highly reliable transmission of control information, L2 pre-processing, and network slicing for providing a dedicated network specialized to a specific service.

Currently, there are ongoing discussions about improvement and performance enhancement of initial 5G mobile communication technologies in consideration of services to be supported by the 5G mobile communication technology, and there has been physical layer standardization of technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) that is UE-satellite direct communication for providing coverage in an area in which communication with terrestrial networks is unavailable, and positioning.

Moreover, there has been ongoing standardization of air interface architecture/protocol regarding technologies such as Industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR), and standardization of system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

When the 5G mobile communication system is commercialized, connected devices being on a rapidly increasing trend are being predicted to be connected to communication networks, and therefore, it is predicted that enhancement of functions and performance of the 5G mobile communication system and integrated operations of the connected devices are required. To this end, new researches are scheduled for eXtended Reality (XR) for efficiently supporting Augmented Reality (AR), Virtual Reality (VR), Mixed Reality (MR) and the like, 5G performance improvement and complexity reduction by utilizing artificial intelligence (AI) and machine learning (ML), Al service support, metaverse service support, drone communication, and the like.

Also, such development of the 5G mobile communication system will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of the 6G mobile communication technologies and improving system networks, Al-based communication technology for implementing system optimization by utilizing satellites and Al from a design stage and internalizing end-to-end Al support functions, and next-generation distributed computing technology for implementing services at levels of complexity exceeding the limit of UE operation capability by utilizing ultra-high-performance communication and computing resources.

As various services can be provided due to the aforementioned features and the development of wireless communication systems, there is a demand for a scheme of using a sidelink relay. WO 2021/091339 A1 relates to channel state reporting in wireless communications.

### Disclosure

### Technical Problem

Provided is a scheme of using a sidelink relay, which may extend service coverage, enhance reliability of data transmission, and support reduction in power consumption of a user equipment (UE).

### Technical Solution

The invention is set out in the appended set of claims.

### Advantageous Effects

According to an embodiment of the present disclosure, a service may be effectively provided to a user in a wireless communication system, such that service coverage may be extended, and battery consumption of a user equipment (UE) in a wireless communication system may be reduced.

Effects that are obtainable from the present disclosure are not limited to the aforementioned effect, and other unstated effects will be clearly understood by one of ordinary skill in the art in view of descriptions below.

### Description of Drawings

FIG. 1A is a diagram illustrating a wireless communication system, according to an embodiment of the present disclosure.
FIG. 1B is a diagram illustrating a wireless communication system, according to an embodiment of the present disclosure.
FIG. 2 is a block diagram illustrating a configuration of a base station (BS) in a wireless communication system, according to an embodiment of the present disclosure.
FIG. 3 is a block diagram illustrating a configuration of a user equipment (UE) in a wireless communication system, according to an embodiment of the present disclosure.
FIG. 4 is a block diagram illustrating a configuration of a communicator in a wireless communication system, according to an embodiment of the present disclosure.
FIG. 5 is a block diagram illustrating a structure of a time-frequency resource of a wireless communication system, according to an embodiment of the present disclosure.
FIG. 6 is a flowchart for describing an operation of controlling flow of traffic by using forwarding of a sidelink relay according to an embodiment of the present disclosure.
FIG. 7A is a flowchart for describing an operation in which a UE reports information necessary for a BS to control traffic flow, according to an embodiment of the present disclosure.
FIG. 7B is a flowchart for describing an operation in which a UE reports information necessary for a BS to control traffic flow, according to an embodiment of the present disclosure.
FIG. 8A is a flowchart for describing an operation in which a sidelink relay reports information for controlling traffic flow, according to an embodiment of the present disclosure.
FIG. 8B is a flowchart for describing an operation in which a sidelink relay reports information for controlling traffic flow, according to an embodiment of the present disclosure.
FIG. 9A is a flowchart for describing an operation in which a sidelink remote UE reports information for controlling traffic flow, according to an embodiment of the present disclosure.
FIG. 9B is a flowchart for describing an operation in which a sidelink remote UE reports information for controlling traffic flow, according to an embodiment of the present disclosure.
FIG. 10A is a flowchart for describing an operation of controlling traffic flow by using sidelink buffer status report signaling, according to an embodiment of the present disclosure.
FIG. 10B is a flowchart for describing an operation of controlling traffic flow by using sidelink buffer status report signaling, according to an embodiment of the present disclosure.
FIG. 11A is a flowchart for describing an operation in which a next generation nodeB (gNB) pre-emptively schedules an uplink (UL) resource or a sidelink resource, according to an embodiment of the present disclosure.
FIG. 11B is a flowchart for describing an operation in which a gNB pre-emptively schedules an UL resource or a sidelink resource, according to an embodiment of the present disclosure.
FIG. 11C is a flowchart for describing an operation in which a gNB pre-emptively schedules an UL resource or a sidelink resource, according to an embodiment of the present disclosure.
FIG. 12A is a flowchart for describing an operation in which a gNB pre-emptively schedules a UL resource or a sidelink resource by using resource request report signaling of a sidelink relay or a sidelink remote UE, according to an embodiment of the present disclosure.
FIG. 12B is a flowchart for describing an operation in which a gNB pre-emptively schedules a UL resource or a sidelink resource by using resource request report signaling of a sidelink relay or a sidelink remote UE, according to an embodiment of the present disclosure.
FIG. 12C is a flowchart for describing an operation in which a gNB pre-emptively schedules a UL resource or a sidelink resource by using resource request report signaling of a sidelink relay or a sidelink remote UE, according to an embodiment of the present disclosure.

Mode for Invention

Hereinafter, exemplary embodiments of the present disclosure will now be described more fully with reference to the accompanying drawings. Here, it should be noted that the same reference numerals denote the same components in the accompanying drawings. Also, detailed descriptions of well-known functions and configurations which may obscure the present disclosure are not provided.

In the following descriptions of embodiments, descriptions of techniques that are well known in the art and are not directly related to the present disclosure are omitted. By omitting unnecessary descriptions, the essence of the present disclosure may not be obscured and may be explicitly conveyed.

For the same reason, some components in the drawings may be exaggerated, omitted, or schematically illustrated. Also, size of each component does not exactly correspond to an actual size of each component, and each component is not limited to each illustrated component. In each drawing, components that are the same or are in correspondence are rendered the same reference numeral.

Advantages and features of the present disclosure and methods of accomplishing the same may be understood more readily by reference to the following detailed descriptions of embodiments and accompanying drawings of the present disclosure. The present disclosure may, however, be embodied in many different forms and should not be construed as being limited to the embodiments set forth herein. Rather, these embodiments are provided so that this present disclosure will be thorough and complete, and will fully convey the concept of the present disclosure to one of ordinary skill in the art. Therefore, the scope of the present disclosure is defined by the appended claims. Throughout the specification, like reference numerals refer to like components.

In various embodiments, it will be understood that each block of flowchart illustrations, and combinations of blocks in the flowchart illustrations, may be implemented by computer program instructions. The computer program instructions may be provided to a processor of a general-purpose computer, special purpose computer, or other programmable data processing apparatus, such that the instructions, which are executed via the processor of the computer or other programmable data processing apparatus, generate means for performing functions specified in the flowchart block(s). The computer program instructions may also be stored in a computer-executable or computer-readable memory that may direct the computer or other programmable data processing apparatus to function in a particular manner. Such that the instructions stored in the computer-executable or computer-readable memory may produce an article of manufacture including instruction means that perform the functions specified in the flowchart block(s). The computer program instructions may also be loaded onto the computer or other programmable data processing apparatus. The instructions to cause a series of operational steps to be performed on the computer or other programmable apparatus to produce a computer implemented process such that the instructions that are executed on the computer or other programmable apparatus provide operations for implementing the functions specified in the flowchart block(s).

In addition, each block of the flowchart illustrations may represent a module, segment, or portion of code, which includes one or more executable instructions for performing specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "... unit" as used in the present embodiment refers to a software or hardware component, such as field-programmable gate array (FPGA) or application-specific integrated circuit (ASIC), which performs certain tasks. However, the term "... unit" does not mean to be limited to software or hardware. A "... unit" may be configured to be in an addressable storage medium or configured to operate one or more processors. Thus, a "... unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in the components and "... units" may be combined into fewer components and "... units" or further separated into additional components and "... units". Further, the components and "... units" may be implemented to operate one or more central processing units (CPUs) in a device or a secure multimedia card.

When particularly describing embodiments of the present disclosure, a New RAN (NR) that is a radio access network and a packet core (5G System, 5G Core Network, or NG Core: Next Generation Core) that is a core network in 5^{th}-generation (5G) mobile communication standards defined by 3GPP that is a mobile communication standard organizing group may be main targets. The essential concept of the present disclosure may be modified without departing from the scope of the present disclosure and may be applied to other communication system based on similar technical backgrounds, and the application may be made based on determination by one of ordinary skill in the art.

In the 5G system, a network data collection and analysis function (NWDAF) may be defined to support network automation, the NWDAF referring to a network function for providing a function to analyze and provide data collected over a 5G network. The NWDAF may collect/store/analyze information from the 5G network and may provide a result to an unspecified network function (NF), and an analysis result may be independently used by each NF.

For convenience of descriptions, the present disclosure uses some of terms and names defined in the 3rd Generation Partnership Project (3GPP) long term evolution (LTE) standards (standards of 5G, NR, LTE, or similar system). However, the present disclosure is not limited to these terms and names, and may be equally applied to communication systems conforming to other standards.

Hereinafter, the present disclosure provides a method and apparatus for controlling uplink (UL) traffic and downlink (DL) traffic between a base station and a user equipment (UE) via communication with a sidelink relay so as to support the UE that performs SL-based data transmission/reception in a wireless communication system.

Hereinafter, the present disclosure relates to a method and apparatus for controlling traffic flow between a base station and a sidelink remote UE in a case where direct data transmission/reception between UEs is performed by using a sidelink relay or data transmission/reception between a UE and the base station is performed in a wireless communication system.

More particularly, the present disclosure may provide a method, performed by a base station, of controlling DL traffic flow being transmitted to a sidelink remote UE, by using forwarding of a sidelink relay, and a method, performed by the sidelink remote UE, of controlling UL traffic flow being transmitted to the base station/a network, by using forwarding of a sidelink relay.

According to an embodiment of the present disclosure, a sidelink relay and a sidelink remote UE may report, to the base station, information measured for controlling of DL traffic flow and information measured for controlling of UL traffic flow. The base station may perform UL and DL traffic flow control operations (e.g., use for UL resource scheduling, control of DL packet transmission flow, use for sidelink resource scheduling, etc.), based on the report information received from the sidelink relay and the sidelink remote UE.

Also, the base station may perform pre-emptive UL resource scheduling or pre-emptive sidelink resource scheduling, based on the report information received from the sidelink relay and the sidelink remote UE. The pre-emptive UL resource scheduling or the pre-emptive sidelink resource scheduling may include an operation of allocating a UL transmission resource or a sidelink transmission resource to a transmission UE before or without transmission resource requesting signaling being received from the transmission UE (the sidelink relay and the sidelink remote UE) that is to actually transmit traffic.

According to an embodiment of the present disclosure, a UE transmits or receives traffic to or from a base station and a network via a sidelink relay detected and selected by the UE, such that service coverage may be extended, reliability of data transmission/reception may be improved, and battery consumption by the UE may be decreased.

Hereinafter, terms indicating signals, terms indicating channels, terms indicating control information, terms indicating network entities, terms indicating components of apparatuses, and the like, as used in the following description, are exemplified for convenience of descriptions. Accordingly, the present disclosure is not limited to terms to be described below, and other terms indicating objects having equal technical meanings may be used.

Hereinafter, a base station is an entity that allocates resources to a UE, and may be at least one of a next-generation node B (gNode B /gNB), an evolved node B (eNode B /eNB), a Node B, a base station (BS), a radio access unit, a BS controller, or a node on a network. A terminal may include a UE, a mobile station (MS), a cellular phone, a smartphone, a computer, or a multimedia system capable of performing a communication function. However, there are merely examples, and the BS and the UE are not limited to the examples. In the present disclosure, an eNB may be interchangeably used with a gNB for convenience of descriptions. That is, a BS described by an eNB may represent a gNB. Also, the term "terminals (UEs)" may refer to not only mobile phones, narrowband Internet of Things (NB-loT) devices, and sensors but also other wireless communication devices.

In the descriptions below, the terms "physical channel" and "signal" may be interchangeably used with "data" or "control signal." For example, a physical downlink shared channel (PDSCH) is a term that indicates a physical channel on which data is transmitted, however, the PDSCH may also refer to data. That is, in the present disclosure, the expression "transmit a physical channel" may have the same meaning as the expression "transmit data or a signal via a physical channel".

Hereinafter, in the present disclosure, higher layer signaling may refer to a method of transferring a signal to a UE from a BS on a DL data channel of a physical layer or to the BS from the UE on an uplink (UL) data channel of the physical layer. The higher layer signaling may be understood as radio resource control (RRC) signaling or a media access control (MAC) control element (CE).

In the present disclosure, the expressions such as "exceeding" or "less than" are used to determine whether a particular condition is satisfied or fulfilled, but the expressions may not exclude meaning of "equal to or greater than" or "equal to or less than". A condition written with "equal to or greater than" may be replaced with "exceeding", a condition with "equal to or less than" may be replaced with "less than", and a condition with "equal to or greater than... and less than..." may be replaced with "exceeding... and equal to or less than... ".

Also, in the present disclosure, one or more embodiments will now be described by using terms and names defined in some communication standards (e.g., the 3GPP), but the present disclosure is not limited to the terms and names. One or more embodiments of the present disclosure may be easily modified and applied to other communication systems.

The technical problems of the present disclosure are not limited to the aforementioned features, and other unstated technical problems will be clearly understood by one of ordinary skill in the art in view of descriptions below.

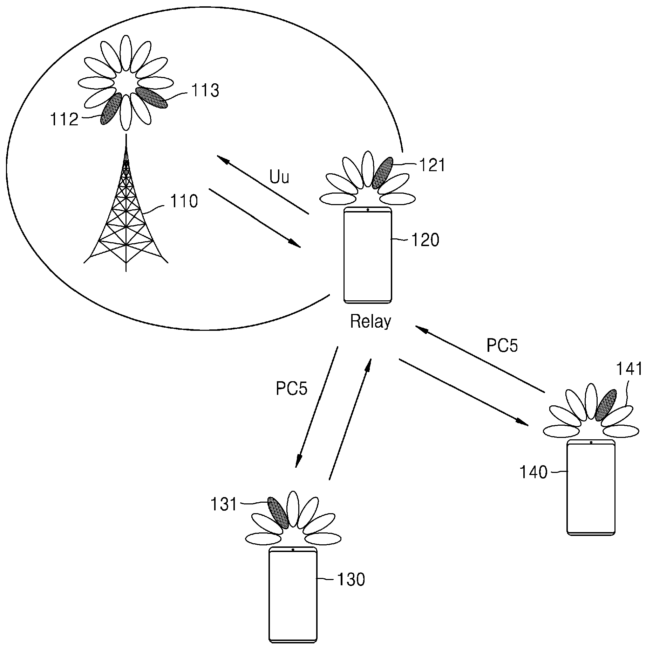

FIG. 1A is a diagram illustrating a wireless communication system, according to an embodiment of the present disclosure.

FIG. 1A illustrates a BS 110, UEs 130 and 140, and a sidelink relay 120 capable of relaying data transmission/reception between a BS and a UE, as parts of nodes using a wireless channel in a wireless communication system. According to an embodiment of the present disclosure, the sidelink relay may be a UE-to-network (U2N) relay. Although FIG. 1A illustrates only one BS, other BSs that are the same as or similar to the BS 110 may be further present, and more relays may be included. That is, a configuration of the wireless communication system of FIG. 1A is an example, and may further include other elements that are not included in FIG. 1A.

According to an embodiment of the present disclosure, the BS 110 may refer to a network infrastructure providing a radio access to the UEs 130 and 140 and the relay 120. The BS 110 has coverage defined as a preset geographical region based on a range for transmitting a signal. The BS 110 may also be referred to as, in addition to the BS, an "access point (AP)", an "eNodeB (eNB)", a "5^{th} generation node (5G) node", a "next generation nodeB (gNB)", a "wireless point", a "transmission/reception point (TRP)", or another term having an equivalent technical meaning.

According to an embodiment of the present disclosure, the relay 120 may be an apparatus used by a user or a network infrastructure and may communicate with the BS 110 via a wireless channel. The sidelink relay may be referred to as a SL relay UE or a relay UE.

A link from the BS 110 to the relay 120 may be referred to as a downlink (DL), and a link from the relay 120 to the BS 110 may be referred to as an uplink (UL). The BS 110 and the relay 120 may be connected to each other via a Uu interface. The UL may refer to a radio link via which the relay 120 transmits data or a control signal to the BS 110, and the DL may refer to a radio link via which the BS 110 transmits data or a control signal to the relay 120.

Also, the relay 120 may communicate with a first UE 130 and a second UE 140 via a wireless channel. A link between the relay 120 and the first UE 130 and a link between the relay 120 and the second UE 140 may each be referred to as a SL, and the sidelink may also be referred to as a PC5 interface.

According to an embodiment of the present disclosure, each of the UEs 130 and 140 may be an apparatus used by a user, and may communicate with the BS 110 via a wireless channel or may communicate with a network via a wireless channel with the relay 120.

In the present disclosure, each of the first UE 130 and the second UE 140 may perform communicate via the wireless channel with the relay 120. At least one of the first UE 130 and the second UE 140 may operate without involvement by a user. That is, at least one of the first UE 130 and the second UE 140 may be an apparatus performing machine type communication (MTC) and may not be carried by a user. Each of the first UE 130 and the second UE 140 may be referred to as, in addition to a terminal, a "UE", an "MS", a "subscriber station", a "remote terminal", a "wireless terminal", a "user device", "sidelink remote terminal", or another term having an equivalent technical meaning.

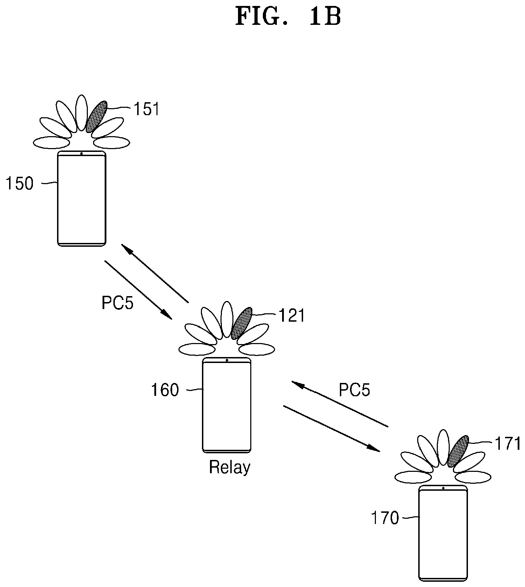

FIG. 1B is a diagram illustrating a wireless communication system, according to an embodiment of the present disclosure.

FIG. 1B illustrates a wireless communication system including UEs 150 and 170, and a sidelink relay 160 capable of relaying data transmission/reception between UEs, as parts of nodes using a wireless channel in the wireless communication system. The sidelink relay 160 may be a UE-to-UE (U2U) relay. Obviously, the wireless communication system is not limited to the example above. That is, a configuration of the wireless communication system of FIG. 1B is an example, and may further include other elements that are not included in FIG. 1B.

According to an embodiment of the present disclosure, the relay 160 may communicate with a third UE 150 and a fourth UE 170 via a wireless channel. In this regard, a link between the relay 160 and the third UE 150 and a link between the relay 160 and the fourth UE 170 may each be referred to as a sidelink, and the sidelink may also be referred to as a PC5 interface.

According to an embodiment of the present disclosure, each of the third UE 150 and the fourth UE 170 is an apparatus used by a user, and may directly communicate with each other via a wireless channel or may communicate with a counterpart UE via a wireless channel with the relay 160. In this regard, a link between the third UE 150 and the fourth UE 170 and a link between the third UE 150 and the relay 160, and a link between the fourth UE 170 and the relay 160 may each be referred to as a sidelink, and the sidelink may be referred to as a PC5 interface.

Also, at least one of the third UE 150 and the fourth UE 170 may operate without involvement by a user. That is, at least one of the third UE 150 and the fourth UE 170 may be an apparatus performing MTC and may not be carried by a user. Each of the third UE 150 and the fourth UE 170 may be referred to as, in addition to a terminal, a "UE", a "mobile station", a "subscriber station", a "remote terminal", a "wireless terminal", a "user device", "sidelink remote terminal", or another term having an equivalent technical meaning.

In the following descriptions, a UL or a DL, a Uu interface, a sidelink, and PC5 may be interchangeably used.

The BS 110, the relays 120 and 160, and the UEs 130, 140, 150, and 170, shown in FIGS. 1A and 1B, may transmit and receive wireless signals in millimeter wave (mmWave) bands (e.g., 28GHz, 30GHz, 38GHz, and 60GHz). In this regard, in order to improve a channel gain, the BS 110, the relays 120 and 160, and the UEs 130, 140, 150, and 170 may perform beamforming. In this case, the beamforming may include transmission beamforming and reception beamforming. That is, the BS 110, the relays 120 and 160, and the UEs 130, 140, 150, and 170 may allocate directivity to a transmission signal or a reception signal. To this end, the BS 110, the relays 120 and 160, and the UEs 130, 140, 150, and 170 may select serving beams 112, 113, 121, 131, 141, 151, 161, and 171 via a beam search or beam management procedure. After the serving beams 112, 113, 121, 131, 141, 151, 161, and 171 are selected, communication may be performed on a resource having a quasi-co-located (QCL) relationship with a resource that transmitted the serving beams 112, 113, 121, 131, 141, 151, 161, and 171.

According to an embodiment of the present disclosure, it may be evaluated that a first antenna port and a second antenna port are in a QCL relationship when large-scale characteristics of a channel via which a symbol on the first antenna port is transmitted are able to be inferred from a channel via which a symbol on the second antenna port is transmitted. For example, the large-scale characteristics may include at least one of a delay spread, a Doppler spread, a Doppler shift, an average gain, an average delay, or a spatial receiver parameter.

The first UE 130, the second UE 140, the third UE 150, and the fourth UE 170, shown in FIGS. 1A and 1B, may support vehicle communication. In the case of vehicle communication, in an LTE system, standardization for vehicle-to-everything (V2X) technology based on a device-to-device (D2D) structure has been completed in the 3GPP Releases 14 and 15, and standardization for V2X technology based on 5G NR has been completed in the 3GPP Release 16. In NR V2X, unicast communication, groupcast (or multicast) communication, and broadcast communication between UEs may be supported.

Also, unlike LTE V2X aimed for transmission/reception of basic safety information for driving of vehicles on roads, the NR V2X aims to provide further advanced services such as platooning, advanced driving, extended sensor, remote driving, and the like.

A V2X service may be divided into a basic safety service and an advanced service. The basic safety service may include detailed services such as a cooperative awareness message (CAM) or basic safety message (BSM) service, a left-turn notification service, a vehicle forward collision warning service, an emergency vehicle approach notification service, a front obstacle warning service, an intersection signal information service, and the like. Also, in the basic safety service, V2X information may be transmitted and received by using a broadcast or unicast, or groupcast transmission method. In the advanced service, quality of service (QoS) requirements may be strengthened than in the basic safety service.

In the advanced service, there may be a need for a method of transmitting and receiving V2X information by using the unicast and groupcast transmission methods, other than the broadcast transmission method, so that V2X information is transmitted and received within a particular vehicle group or V2X information is transmitted and received between two vehicles. The advanced service may include detailed services such as a platooning service, an autonomous driving service, a remote driving service, an extended sensor-based V2X service, and the like. Also, the NR V2X may provide a public safety service by supporting a direct communication service between UEs in an area where there is no network infrastructure.

Hereinafter, a sidelink (SL) refers to a transmission/reception path for a signal between UEs or a transmission/reception path for a signal between a UE and a relay, and the sidelink may be interchangeably used with a PC5 interface. Hereinafter, a BS may refer to an entity for allocating a resource to a UE, and a relay and may be a BS supporting both V2X communication and general cellular communication, or a BS supporting only V2X communication.

That is, the BS may refer to an NR BS (e.g., a gNB), an LTE BS (e.g., an eNB), or a road site unit (RSU). A UE (terminal) may include all of a general UE, a mobile station, a vehicle supporting vehicle-to-vehicle (V2V) communication, a vehicle or a pedestrian's handset (e.g., a smartphone) supporting a vehicle-to-pedestrian (V2P) communication, a vehicle supporting vehicle-to-network (V2N) communication, a vehicle supporting vehicle-to-infrastructure (V2I) communication, an RSU having embedded therein UE functions, an RSU having embedded therein BS functions, or an RSU having embedded therein some BS functions and some UE functions.

Meanwhile, in the present disclosure, the UE may refer to the vehicle supporting V2V communication, the vehicle or the pedestrian's handset (e.g., a smartphone) supporting V2P communication, the vehicle supporting V2N communication, or the vehicle supporting V2I communication. The UE may refer to a user device supporting communication between devices of a public safety net.

Also, in the present disclosure, the UE may refer to a road side unit (RSU) having embedded therein UE functions, the RSU having embedded therein BS functions, or the RSU having embedded therein some BS functions and some UE functions.

In the present disclosure, a relay may refer to a vehicle supporting V2X communication or a user device supporting communication between devices of a public safety net. In addition, in the present disclosure, the relay may refer to an apparatus having embedded therein UE functions, an apparatus having embedded therein BS functions, or an apparatus having embedded therein some UE functions or some BS functions.

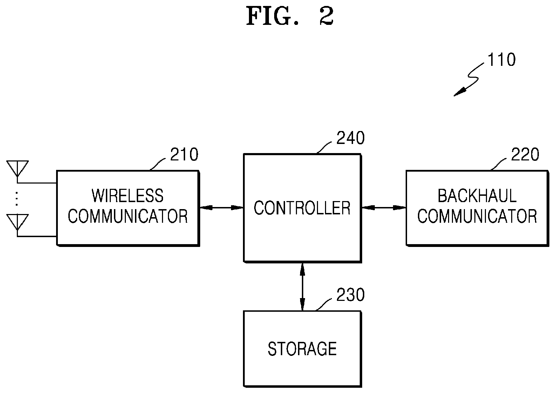

FIG. 2 is a block diagram illustrating a configuration of a BS in a wireless communication system, according to an embodiment of the present disclosure.

The configuration shown in FIG. 2 may be understood as a configuration of the BS 110. The term "... unit" or "...er/or" used herein indicates a unit, which processes at least one function or operation, and may be implemented by hardware or software, or by a combination of hardware and software. Referring to FIG. 2, the BS 110 may include a wireless communicator 210, a backhaul communicator 220, a storage 230, and a controller 240. However, elements of the BS 110 are not limited to the above example. For example, the BS may include more elements than those described above or may include fewer elements than those described above. In addition, the wireless communicator 210, the backhaul communicator 220, the storage 230, and the controller 240 may be implemented in one chip. Also, the controller 240 may include one or more processors.

The wireless communicator 210 may perform functions for transmitting and receiving a signal via a wireless channel. For example, the wireless communicator 210 may perform conversion between a baseband signal and a bit string based on physical layer specifications of a system. For example, for data transmission, the wireless communicator 210 may generate complex symbols by encoding and modulating a transmission bit string. For data reception, the wireless communicator 210 may reconstruct a reception bit string by demodulating and decoding a baseband signal.

Also, the wireless communicator 210 may up-convert a baseband signal into a radio frequency (RF) band signal and then may transmit the RF band signal via an antenna, and may down-convert an RF band signal received via the antenna, into a baseband signal. To this end, the wireless communicator 210 may include a transmission filter, a reception filter, an amplifier, a mixer, an oscillator, a digital-to-analog converter (DAC), an analog-to-digital converter (ADC), or the like. Also, the wireless communicator 210 may include a plurality of transmission/reception paths. Furthermore, the wireless communicator 210 may include at least one antenna array including a plurality of antenna elements.

In terms of hardware, the wireless communicator 210 may include a digital unit and an analog unit, and the analog unit may include a plurality of sub-units depending on operating power, an operating frequency, or the like. The digital unit may include at least one processor (e.g., a digital signal processor (DSP)).

The wireless communicator 210 may transmit and receive signals as described above. Accordingly, all or part of the wireless communicator 210 may be referred to as a transmitter, a receiver, or a transceiver. Also, in the descriptions below, transmission and reception performed via a wireless channel indicate that the above processing is performed by the wireless communicator 210.

The backhaul communicator 220 may provide an interface for communicating with other nodes in the network. That is, the backhaul communicator 220 may convert a bit string into a physical signal, the bit string being transmitted from the BS to another node, e.g., another access node, another BS 110, an upper node, or a core network, and may convert a physical signal into a bit string, the physical signal being received from another node.

The storage 230 may store data for operations of the BS 110, such as basic programs, application programs, and configuration information. The storage 230 may include a volatile memory, a non-volatile memory, or a combination of a volatile memory and a non-volatile memory. Also, the storage 230 may provide the stored data, according to a request of the controller 240.

The controller 240 may control overall operations of the BS 110. For example, the controller 240 may transmit and receive a signal via the wireless communicator 210 or via the backhaul communicator 220. Also, the controller 240 records and reads data to and from the storage 230. The controller 240 may perform functions of a protocol stack required by the communication standards. According to another embodiment, the protocol stack may be included in the wireless communicator 210. To this end, the controller 240 may include at least one processor. According to embodiments, the controller 240 may control the BS 110 to perform operations according to embodiments described below.

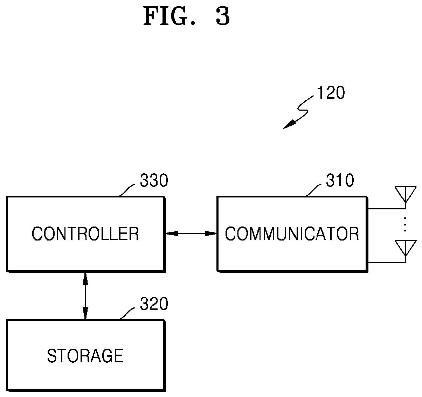

FIG. 3 is a block diagram illustrating a configuration of a UE in a wireless communication system, according to an embodiment of the present disclosure.

The configuration illustrated in FIG. 3 may be understood as a configuration of the UE 120. The term such as "... unit" or "...er/or" used herein indicates a unit, which processes at least one function or operation, and may be implemented by hardware or software, or by a combination of hardware and software.

Referring to FIG. 3, the UE 120 may include a communicator 310, a storage 320, and a controller 330. However, elements of the UE 120 are not limited thereto. For example, the UE 120 may include more elements than those described above or fewer elements than those described above. In addition, the communicator 310, the storage 320, and the controller 330 may be implemented in one chip. Also, the controller 330 may include one or more processors.

The communicator 310 performs functions for transmitting and receiving a signal through a wireless channel. For example, the communicator 310 may perform conversion between a baseband signal and a bit string based on physical layer specifications of a system. For example, for data transmission, the communicator 310 generates complex symbols by encoding and modulating a transmission bit string. Also, for data reception, the communicator 310 may reconstruct a reception bit string by demodulating and decoding a baseband signal. Also, the communicator 310 may up-convert a baseband signal into an RF band signal and then may transmit the RF signal via an antenna, and may down-convert an RF band signal received via the antenna into a baseband signal. For example, the communicator 310 may include a transmission filter, a reception filter, an amplifier, a mixer, an oscillator, a DAC, an ADC, or the like.

Also, the communicator 310 may include a plurality of transmission/reception paths. Furthermore, the communicator 310 may include at least one antenna array including a plurality of antenna elements. In terms of hardware, the communicator 310 may include a digital circuit and an analog circuit (e.g., a radio frequency integrated circuit (RFIC)). The digital circuit and the analog circuit may be implemented in one package. Also, the communicator 310 may include a plurality of RF chains. Furthermore, the communicator 310 may perform beamforming.

The communicator 310 may transmit and receive signals as described above. Accordingly, all or parts of the communicator 310 may be referred to as a 'transmitter', a 'receiver', or a 'transceiver'. Also, in the descriptions below, transmission and reception performed via a wireless channel may indicate that the above processing is performed by the communicator 310.

The storage 320 may store data for operations of the UE 120, such as basic programs, application programs, and configuration information. The storage 320 may include a volatile memory, a non-volatile memory, or a combination of a volatile memory and a non-volatile memory. Furthermore, the storage 320 provides stored data, according to a request of the controller 330.

The controller 330 controls overall operations of the UE 120. For example, the controller 330 may transmit and receive a signal via the communicator 310. Also, the controller 330 records and reads data to and from the storage 320. Also, the controller 330 may perform functions of a protocol stack required by the communication standards. To this end, the controller 330 may include at least one processor or microprocessor or may be a part of a processor. A part of the communicator 310 and the controller 330 may be referred to as a communication processor (CP). According to embodiments, the controller 330 may control the UE 120 to perform operations according to embodiments described below.

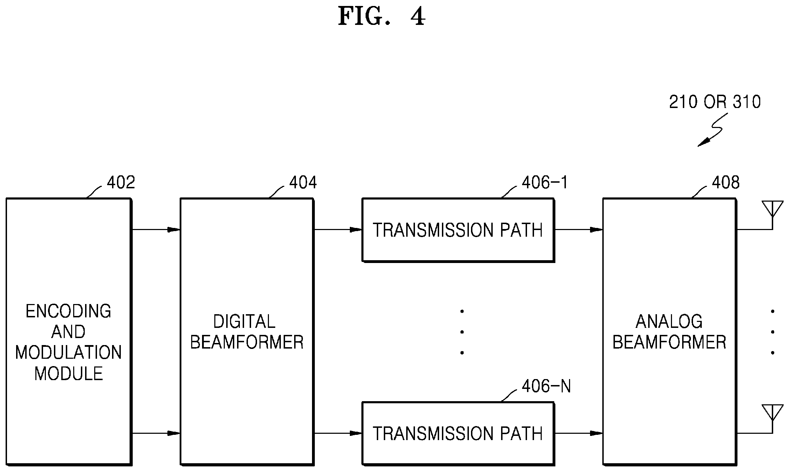

FIG. 4 is a block diagram illustrating a configuration of a communicator in a wireless communication system, according to an embodiment of the present disclosure.

FIG. 4 illustrates an example of a detailed configuration of the wireless communicator 210 of FIG. 2 or the communicator 310 of FIG. 3. In detail, as part of the wireless communicator 210 of FIG. 2 or the communicator 310 of FIG. 3, FIG. 4 illustrates elements for performing beamforming.

Referring to FIG. 4, the wireless communicator 210 or the communicator 310 may include an encoding and modulation module 402, a digital beamformer 404, a plurality of transmission paths 406-1 to 406-N, and an analog beamformer 408.

The encoding and modulation module 402 may perform channel encoding. For the channel encoding, at least one of a low density parity check (LDPC) code, a convolution code, and a polar code may be used. The encoding and modulation module 402 generates modulated symbols by performing constellation mapping.

The digital beamformer 404 may perform beamforming on a digital signal (e.g., the modulated symbols). To this end, the digital beamformer 404 may multiply the modulated symbols by beamforming weights. Here, the beamforming weights are used to change a size and phase of a signal, and may be referred to as a precoding matrix or a precoder. The digital beamformer 404 may output modulated symbols that are digitally-beamformed to the plurality of transmission paths 406-1 to 406-N. Here, according to a multiple input multiple output (MIMO) transmission technique, the modulated symbols may be multiplexed or the same modulated symbols may be provided to the plurality of transmission paths 406-1 to 406-N.

The plurality of transmission paths 406-1 to 406-N may convert the digitally-beamformed digital signals into analog signals. To this end, each of the plurality of transmission paths 406-1 to 406-N may include an inverse fast Fourier transform (IFFT) operator, a cyclic prefix (CP) inserter, a DAC, and an up-converter. The CP inserter is for orthogonal frequency division multiplexing (OFDM) and may be excluded when another physical layer method (e.g., a filter bank multi-carrier (FBMC)) is applied. That is, the plurality of transmission paths 406-1 to 406-N may provide independent signal processing processes to a plurality of streams generated through digital beamforming. However, depending on implementation methods, some elements of the plurality of transmission paths 406-1 to 406-N may be commonly used.

The analog beamformer 408 may perform beamforming on the analog signals. To this end, the digital beamformer 404 may multiply the analog signals by beamforming weights. Here, the beamforming weights are used to change a size and phase of a signal. In detail, the analog beamformer 440 may be configured in various ways, based on connection structures between the plurality of transmission paths 406-1 to 406-N and antennas. For example, each of the plurality of transmission paths 406-1 to 406-N may be connected to one antenna array. In another example, each of the plurality of transmission paths 406-1 to 406-N may be connected to one antenna array. In another example, the plurality of transmission paths 406-1 to 406-N may be adaptively connected to one antenna array or at least two antenna arrays.

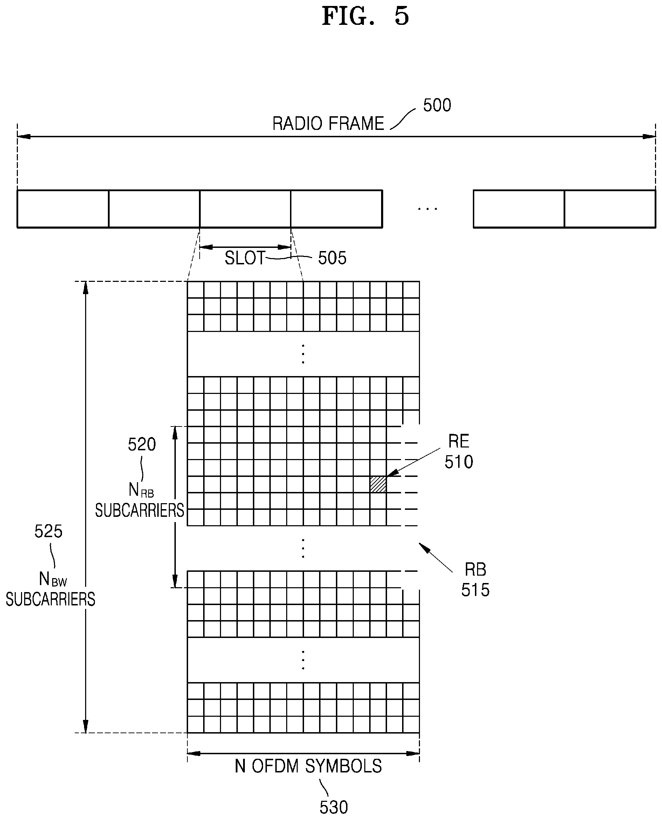

FIG. 5 is a block diagram illustrating a structure of a time-frequency resource of a wireless communication system, according to an embodiment of the present disclosure.

Referring to FIG. 5, in a radio resource domain, a horizontal axis represents a time domain and a vertical axis represents a frequency domain. A minimum transmission unit in the time domain is an OFDM symbol or a discrete Fourier transform spread OFDM (DFT-S-OFDM) symbol, and N_{symb} OFDM symbols (or DFT-S-OFDM symbols) 530 may be included in one slot 505. Unlike a slot, in an NR system, a length of a subframe may be defined as 1.0 ms and a length of a radio frame 500 may be defined as 10 ms. A minimum transmission unit in the frequency domain is a subcarrier, and a bandwidth of an entire system transmission band may include a total of N_{BW} subcarriers 525. Specific numerical values such as N_{symb} and N_{BW} may vary according to a system.

A basic unit in a time-frequency resource domain is a resource element (RE) 510, and the RE 510 may be represented by an OFDM symbol index or by a DFT-S-OFDM symbol index and a subcarrier index. A resource block (RB) 515 may be defined as N_{RB} consecutive subcarriers 520 in the frequency domain. In general, a minimum transmission unit of data is an RB unit, and in the NR system, it may generally be N_{symb} = 14 and N_{RB} = 12.

The structure of the time-frequency resource as shown in FIG. 5 may be applied to a Uu interface. Also, the structure of the time-frequency resource as shown in FIG. 5 may be similarly applied to a sidelink.

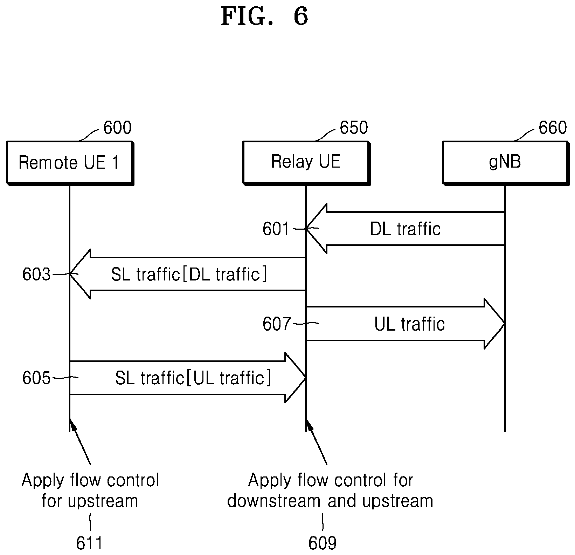

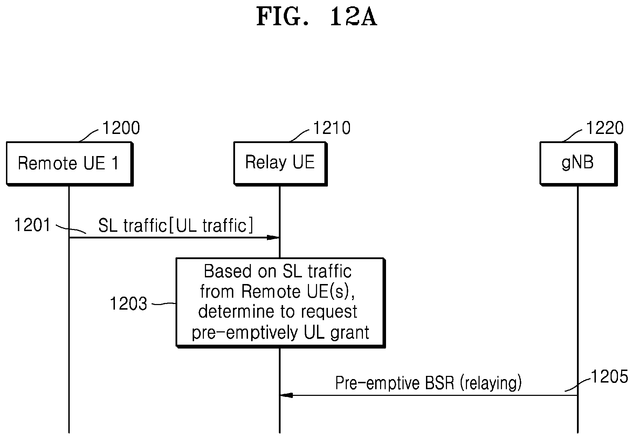

Hereinafter, with reference to various embodiments of FIGS. 6 to 12C, a method by which a BS supports DL traffic flow of transmitting traffic to a sidelink remote UE via forwarding of a sidelink relay, a method by which the sidelink remote UE supports UL traffic flow of transmitting traffic to the BS via forwarding of the sidelink relay, a method by which the BS requests the sidelink relay or the sidelink remote UE for transmission of measurement information necessary for controlling UL traffic flow or DL traffic flow, a method by which the sidelink relay or the sidelink remote UE transmits, to the BS, measurement information necessary for controlling UL traffic flow or DL traffic flow, a method by which the sidelink remote UE transmits, to the sidelink relay, measurement information necessary for controlling traffic flow, a method by which the BS controls UL traffic flow or DL traffic flow, based on measurement information of the sidelink relay or the sidelink remote UE, traffic information of the sidelink remote UE, or the like, a method by which the BS pre-emptively schedules a UL transmission resource or a sidelink transmission resource to the sidelink relay or the sidelink remote UE, and a method by which the sidelink relay or the sidelink remote UE transmits, to the BS, pre-emptive transmission resource request signaling for the BS to pre-emptively schedule a UL transmission resource or a sidelink transmission resource will be described. It is obvious to one of ordinary skill in the art that methods below may each be independently performed, or two or more methods may be combined to be performed.

Embodiments of FIGS. 6 to 12C show one sidelink remote UE connected to a sidelink relay, but the same is applicable to one or more sidelink remote UEs connected to the sidelink relay. That is, a traffic flow control method provided in various embodiments of the present disclosure may be used to control traffic flow of one or more sidelink remote UEs connected to a sidelink relay or to control traffic flow of one or more UL bearers or DL bearers of one or more sidelink remote UEs, the traffic flow being transmitted/received to/from a BS via the sidelink relay.

In the embodiments of FIGS. 6 to 12C, a traffic flow target to be controlled may be DL traffic of a sidelink remote UE, and UL traffic of the sidelink remote UE. A BS, a sidelink relay, and a sidelink remote UE may have at least one or combination of a DL bearer and a UL bearer corresponding to DL traffic of the sidelink remote UE and UL traffic of the sidelink remote UE, sidelink radio link control (RLC) channel configuration corresponding to the DL bearer, DL RLC and LCH configuration for the DL bearer, sidelink RLC channel configuration corresponding to the UL bearer, and UL RLC and LCH configuration for the UL bearer. The sidelink RLC channel configuration may include sidelink RLC and logical channel (LCH) configuration. For example, the sidelink relay may have at least one configuration from among sidelink remote UE identification information with respect to one or more sidelink remote UEs connected thereto, information of one or more UL bearers of a sidelink remote UE, information of one or more DL bearers of the sidelink remote UE, information of a sidelink RLC bearer corresponding to the one or more UL bearers of the sidelink remote UE, and information of a sidelink RLC bearer corresponding to the one or more DL bearers of the sidelink remote UE. Configuration managed by the sidelink relay includes mapping information of sidelink RLC channel configuration of the sidelink remote UE to which the sidelink relay has to forward and UL bearer RLC configuration or DL bearer RLC configuration of a sidelink UE.

The sidelink remote UE may have information of a sidelink RLC bearer that uses sidelink relay forwarding mapped to a UL bearer or a DL bearer of the sidelink remote UE itself. According to various embodiments of the present disclosure, measurement information necessary for controlling traffic flow may be collected by at least one of the sidelink remote UE, the BS, and the sidelink relay with respect to a UL bearer of the sidelink remote UE, a DL bearer of the sidelink remote UE, and a sidelink bearer of the sidelink remote UE, which the BS, the sidelink relay, and the sidelink remote UE have, and the measurement information may be reported.

FIG. 6 is a flowchart for describing an operation of controlling flow of traffic by using forwarding of a sidelink relay according to an embodiment of the present disclosure.

Referring to FIG. 6, a sidelink remote UE 600 may be connected to a sidelink relay 650, and may perform UL traffic and DL traffic transmission/reception to/from a gNB 660 via forwarding of the sidelink relay 650. In operation 601, the gNB 660 may transmit DL traffic of the sidelink remote UE 600 to the sidelink relay 650, and the sidelink relay 650 may relay the DL traffic of the sidelink remote UE 600 by using a sidelink in operation 603.

In operation 605, the sidelink remote UE 600 may transmit UL traffic to the sidelink relay 650 by using a SL, and in operation 607, the sidelink relay 650 may relay the UL traffic of the sidelink remote UE 600 to the gNB 660. The gNB 660 may receive assistance of the sidelink remote UE 600 and the sidelink relay 650 so as to control flow of the UL traffic of the sidelink remote UE 600 (operations 611 and 609), and the gNB 660 may receive assistance of the sidelink relay 650 so as to control flow of the DL traffic of the sidelink remote UE 600 (operation 609).

According to an embodiment of the present disclosure, the DL traffic control in operation 609 may include followings. A link that requires the DL traffic control may include a Uu link in which the gNB 660 transmits traffic to the sidelink relay 650, and a sidelink in which the sidelink relay 650 transmits traffic to the sidelink remote UE 600.

The gNB 660 may request the sidelink relay 650 to report information for determination of DL traffic flow or may configure information for triggering, in the sidelink relay 650, reporting of information about DL traffic flow. For example, the information for determination of DL traffic flow may include buffer status information about DL traffic of the sidelink remote UE 600 which is buffered in the sidelink relay 650. The buffer status information may be DL traffic flow control information which may be measured by the sidelink relay 650.

The sidelink relay 650 may report, to the gNB 660, measurement information necessary for DL traffic control. A UL message the sidelink relay 650 may use to report the measurement information necessary for DL traffic control to the gNB 660 may include a sidelink buffer status report (SL-BSR) message, an RRC message such as UEAssistancelnformationNR, adaptation sublayer control signaling of a sidelink relay, and a medium access control control element (MAC CE) message.

The SL-BSR may be a message usable when a sidelink scheduling mode 1 (mode1, a mode in which a BS schedules a sidelink transmission resource) is configured for the sidelink relay 650. That is, when mode1 is configured for the sidelink relay 650, a sidelink buffer status report (SL-BSR) transmitted from the sidelink relay 650 to the gNB 660 may be used to report a buffer status of a sidelink logic channel group mapped to a DL bearer of the sidelink remote UE 600.

As the SL-BSR is used to report buffer status information of a sidelink logic channel group to a BS, sidelink logic channel group buffer status information of the sidelink remote UE 600 which is reported via the SL-BSR may be used as information with which the gNB 660 identifies DL traffic flow from the sidelink relay 650 to the sidelink remote UE 600.

According to various embodiments of the present disclosure, a SL-BSR used to report DL traffic flow control measurement information may use the same format (reporting a buffer size corresponding to a sidelink logic channel group) as a normal SL-BSR. Also, in order to particularly report DL traffic flow which cannot be determined using the format of the normal SL-BSR, a SL-BSR extended with a different format (a format including an increased number of logic channel groups (as a logic channel is mapped to a logic channel group, when the number of logic channel groups is increased, an effect in which a buffer size is reported for each logic channel may be generated), a format with which a buffer size can be reported for a logic channel (LCH) not a logic channel group (LCG), a format with which reporting may be performed for each sidelink remote UE, etc.) may be used.

When a sidelink scheduling mode 2 (mode2, a mode in which a sidelink relay directly schedules a sidelink transmission resource) is configured for the sidelink relay 650, a normal SL-BSR is not transmitted, and thus, separate UL signaling (transmitted from the sidelink relay to the BS), not the SL-BSR, may be used to report a buffer status of a sidelink logic channel corresponding to a DL bearer of the sidelink remote UE 600.

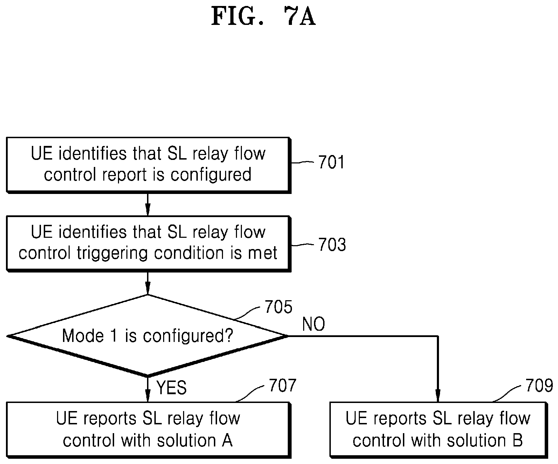

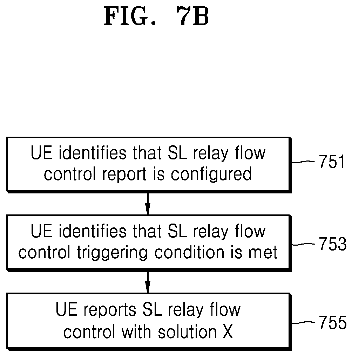

According to an embodiment of the present disclosure, buffer status information reported by separate UL signaling may be used as information with which the gNB 660 identifies DL traffic flow from the sidelink relay 650 to the sidelink remote UE 600. An embodiment in which DL traffic flow control measurement report messages are divided according to sidelink scheduling modes configured for the sidelink relay 650 will be described with reference to FIG. 7A. Also, according to an embodiment of the present disclosure, a separate DL traffic flow control measurement report message may be defined to be used, regardless of a sidelink scheduling mode configured for the sidelink relay 650. This will be described with reference to FIG. 7B.

UL traffic control of operation 609 and operation 611 may include followings. A link requesting UL traffic control may include a sidelink in which the sidelink remote UE 600 transmits traffic to the sidelink relay 650 and a Uu link in which the sidelink relay 650 transmits traffic to the gNB 660.

The gNB 660 may determine UL traffic flow, based on information of a uplink buffer status report (Uu BSR, a normal Uu BSR is used to report a buffer size of a UL logic channel group) message transmitted from the sidelink relay 650 to the BS. That is, the sidelink relay 650 may transmit a uplink buffer status report (Uu BSR) to the gNB 660, and the Uu BSR may be used to report a buffer status of a logic channel configured for a sidelink relay corresponding to a UL bearer of the sidelink remote UE 600.

Alternatively, separate UL signaling (transmitted from the sidelink relay to the BS) may be used to report measurement information necessary for controlling UL traffic flow. The separate UL signaling may be used to report the buffer status of the logic channel configured for the sidelink relay corresponding to the UL bearer of the sidelink remote UE 600.

The measurement information reported via the Uu BSR or the separate UL signaling may be used as information for the gNB 660 to identify the UL traffic flow of the sidelink remote UE 600 to the gNB 660, from the sidelink relay 650. According to an embodiment of the present disclosure, the sidelink remote UE 600 may be configured to report, to the gNB 660, traffic flow control measurement information measurable by the sidelink remote UE 600, or the sidelink remote UE 600 may be configured to report, to the sidelink relay 650, traffic flow control measurement information measurable by the sidelink remote UE 600.

In a case where the sidelink remote UE 600 is configured to report, to the sidelink relay 650, traffic flow control measurement information measurable by the sidelink remote UE 600, when the sidelink relay 650 reports sidelink relay traffic flow control measurement information to the gNB 660, the sidelink relay 650 may also report (simple forwarding from the sidelink relay 650 the gNB 660 or adding to a report message transmitted from the sidelink relay 650) control measurement information received from the sidelink remote UE 600 or may reflect to (reconfigure) the traffic flow control measurement information of the sidelink relay 650 and report it to the gNB 660.

According to an embodiment of the present disclosure, for example, the traffic flow control measurement information measurable by the sidelink remote UE 600 may include a buffer size with respect to a logic channel of the sidelink remote UE 600. When mode1 is configured for the sidelink remote UE 600, a normal SL-BSR transmitted from the sidelink remote UE 600 to the gNB 660 may be used to report a buffer size of a logic channel group configured for the sidelink remote UE 600. Buffer status information of a sidelink logic channel group of the sidelink remote UE 600 which is reported via the SL-BSR may be used for the gNB 660 to identify UL traffic flow from the sidelink remote UE 600 to the sidelink relay 650.

According to various embodiments of the present disclosure, a SL-BSR used for reporting UL traffic flow control measurement information may employ the same format as a normal SL-BSR (reporting of a buffer size corresponding to a sidelink logic channel group). Also, in order to particularly report DL traffic flow which cannot be determined using the format of the normal SL-BSR, a SL-BSR extended with a different format (a format including an increased number of logic channel groups (as a logic channel is mapped to a logic channel group, when the number of logic channel groups is increased, an effect in which a buffer size is reported for each logic channel may be generated), a format with which a buffer size can be reported for a logic channel (LCH) not a logic channel group (LCG), a format with which reporting may be performed for each sidelink remote UE, etc.) may be used.

When mode2 is configured for the sidelink remote UE 600, the normal SL-BSR is not transmitted, and thus, separate signaling (transmitted from the sidelink remote UE to the BS or transmitted from the sidelink remote UE to the sidelink relay), not the SL-BSR, may be used to report a buffer status of a sidelink logic channel corresponding to a UL bearer of the sidelink remote UE 600.

A UL message the sidelink remote UE 600 may use to report the measurement information necessary for UL traffic control to the gNB 660 may include a sidelink buffer status report (SL-BSR) message, an RRC message such as UEAssistancelnformationNR, and a MAC CE message. A message the sidelink remote UE 600 may use to report the measurement information necessary for UL traffic control to the sidelink relay 650 may include a sidelink MAC CE and a sidelink RRC message.

According to an embodiment of the present disclosure, the reported measurement information (e.g., the buffer size information reported by the sidelink remote UE 600) may be used for the gNB 660 to identify UL traffic flow transmitted via a sidelink from the sidelink remote UE 600 to the sidelink relay 650.

An embodiment in which UL traffic flow control measurement report messages are divided according to sidelink scheduling modes configured for the sidelink remote UE 600 will be described with reference to FIG. 7A. Also, according to an embodiment of the present disclosure, a UL traffic flow control measurement report message may be defined to be used regardless of a sidelink scheduling mode configured for the sidelink remote UE 600. This will be described with reference to FIG. 7B. Sidelink relay traffic flow control measurement report information measurable by the sidelink remote UE 600 may be used for the gNB 660 to identify UL traffic flow from the sidelink remote UE 600 to the sidelink relay 650.

FIGS. 7A to 7B are flowcharts for describing an operation in which a UE reports information necessary for a BS to control traffic flow, according to an embodiment of the present disclosure.

With reference to an embodiment of FIG. 6, provided is a case in which a sidelink relay or a sidelink remote UE may be configured with a sidelink scheduling mode 1 (mode1) and a sidelink scheduling mode 2 (mode2) as a transmission resource scheduling mode in which traffic is transmitted via a sidelink. When mode1 is configured, the BS may schedule and allocate a sidelink transmission resource to a transmission UE, and when mode2 is configured, the transmission UE may directly schedule the sidelink transmission resource.

When mode1 is configured for the sidelink relay or the sidelink remote UE, the transmission UE may transmit a SL-BSR to the BS so as to request the sidelink transmission resource. An embodiment of a case in which the SL-BSR for a sidelink transmission resource request is used or not used to report, to the BS, measurement information necessary for traffic flow control, according to sidelink scheduling mode configuration will be described with reference to FIG. 7A.

Referring to FIG. 7A, in operation 701, the UE (the sidelink relay or the sidelink remote UE) may determine whether it is configured to perform sidelink relay traffic flow control measurement report. The UE that is configured to perform the sidelink relay traffic flow control measurement report determines, in operation 703, whether a condition of triggering reporting of sidelink relay traffic flow control measurement is satisfied.

An embodiment of a case in which the triggering condition in operation 703 is satisfied may include a case in which the sidelink relay traffic flow control measurement report has to be transmitted as at least one or combination of conditions of [Table 1] is satisfied, and a case in which the sidelink relay traffic flow control measurement report has to be transmitted as sidelink relay traffic flow control measurement report polling is received from the BS.

When the UE determines to transmit the sidelink relay traffic flow control measurement report, the UE may determine, in operation 705, whether mode 1 is configured. According to the determination in operation 705, when mode 1 is configured, the UE may perform, in operation 707, the sidelink relay traffic flow control measurement report by using Solution A. Solution A indicates that the UE transmits a SL-BSR to the BS so as to report sidelink relay traffic flow control measurement information.

Alternatively, according to the determination in operation 705, when mode 1 is not configured but mode 2 is configured, the UE may perform, in operation 709, the sidelink relay traffic flow control measurement report by using Solution B. Solution B indicates that the UE transmits separate UL signaling (at least one of (RRC or MAC CE or relay adaption sublayer signaling) so as to report the sidelink relay traffic flow control measurement information to the BS.

Another example of the separate UL signaling may include a UEAssistancelnformationNR (UAI) message. A normal UAI message is used to transmit, to the BS, sidelink traffic pattern information of the UE so as to assist SL configured grant type 1 or SL configured grant type 2-based scheduling. When a UAI message is used as the sidelink relay traffic flow control measurement report, the UAI message may be used to report a buffer size of a sidelink logic channel group or logic channel of the sidelink remote UE.

According to various embodiments of the present disclosure, embodiments of a condition by which the sidelink relay or the sidelink remote UE triggers the sidelink relay traffic flow control measurement report are as below.

**[Table 1]**

| |
|---|
| A target of measurement report triggering or a target of measurement report may be at least one or combination of a sidelink remote UE, a UL RLC bearer of a sidelink remote UE, a DL RLC bearer of a sidelink remote UE, a sidelink RLC bearer mapped to a UL RLC bearer of a sidelink remote UE, a sidelink RLC bearer mapped to a DL RLC bearer of a sidelink remote UE, a RLC bearer of a sidelink relay corresponding to a UL RLC bearer of a sidelink remote UE, a RLC bearer of a sidelink relay corresponding to a DL RLC bearer of a sidelink remote UE, a sidelink LCH or sidelink LCH group which is mapped to a UL RLC bearer of a sidelink remote UE, or a sidelink LCH or sidelink LCH group which is mapped to a DL RLC bearer of a sidelink remote UE. |
| (A sidelink RLC channel may be configured for each of a UL bearer and a DL bearer of a sidelink remote UE. The sidelink RLC channel configuration may include sidelink RLC/LCH (logical channel) configuration and Uu RLC channel configuration may include Uu RLC/LCH (logical channel) configuration.) |
| Information used in determining measurement report triggering may be at least one or combination of buffer load, CBR (channel busy ratio), latency bound/PDB (packet delay budget), or number of continuous pre-empted resource selection. |
| A condition of satisfying sidelink measurement report triggering with respect to a target of measurement report triggering or a target of measurement report may be at least one or combination of 1 to 4 below. |
| 1. Buffer level exceeding certain level (Buffer load exceeding a certain level) (For example, a buffer size or a buffer size level corresponding to a sidelink RLC bearer of a sidelink remote UE may be compared with a threshold value, and if it is larger than the threshold value, sidelink relay traffic flow control measurement report may be triggered. |
| 2. CBR (Channel Busy Ratio) of configured/assigned SL resource pool exceeding certain level (CBR of configured/assigned SL resource pool exceeding a certain level) (For example, a congestion level of a sidelink resource pool used for transmitting traffic corresponding to a sidelink RLC bearer of a sidelink remote UE may be compared with a threshold value, and if it is larger than the threshold value, sidelink relay traffic flow control measurement report may be triggered. |
| The reason why traffic flow control based on a CBR is requested is that a CBR of a transmission resource pool reflects a congestion status of a TX resource, and thus, if it is not possible to timely obtain a resource to be used for a remote UE to transmit a sidelink packet including a UL packet or a relay UE to transmit a sidelink packet including a DL packet, an amount of packets buffered in the remote UE or the relay UE may be increased. That is, before occurrence of actual buffer overflow, a possibility of buffer over flow may be predicted due to a CRB increase. As the buffer over flow may occur due to the CRB increase, a necessity of flow control may be reported. |
| 3. When PDB, latency bound, latency requirement are not satisfied in QoS flow of remote UE (PDB (Packet Delay Budget), latency bound, latency requirement for remote UE's QoS flow is not met) (For example, if it is determined that latency requirement corresponding to a sidelink RLC bearer of a sidelink remote UE is not satisfied, sidelink relay traffic flow control measurement report may be triggered.) |
| The reason why traffic flow control based on PDB/latency bound/latency requirement is required is that, even if a buffer status of a relay UE is not overflowed, the number of |
| times PDB/latency bound/latency requirement not being satisfied with respect to a logic channel of a certain QoS flow of a remote UE may increase. In this case, a necessity of flow control with respect to forwarding of traffic of the logic channel of the certain QoS flow of the remote UE may be reported. |
| 4. When the number of times a scheduled resource is sequentially pre-occupied is larger than a threshold value (e.g., when a resource for transmitting traffic corresponding to a sidelink RLC bearer of a sidelink remote UE is sequentially pre-occupied for transmission of other traffic, the number of times of sequential preoccupations may be compared with a threshold value, and if it is larger than the threshold value, sidelink relay traffic flow control measurement report may be triggered. (For this scenario, Relay UE can report all the flow control information for Remote UE(s) relayed by Relay UE since the pre-empted resource may not target for certain logical channel(s).) The reason why traffic flow control based on preemptive resource re-selection is requested is that, even if a buffer status of a remote UE is not overflowed, preemptive resource re-selection may keep occurring with respect to a logic channel of a certain QoS flow of a remote UE which is forwarded via the relay UE, such that packet transmission of the corresponding logic channel may be delayed. In this case, a necessity of flow control with respect to forwarding of traffic of the logic channel of the certain QoS flow of the remote UE may be reported. |
| A triggering configuration parameter may be equally or differently configured for a sidelink relay and a sidelink remote UE. If differently configured, which condition (one or a combination) is to be used and which threshold value is to be used may be differently configured for the sidelink relay and the sidelink remote UE. |
| A BS may configure or pre-configure by signaling the triggering configuration parameter for the sidelink relay and the sidelink remote UE. |

Hereinafter, with reference to FIG. 7B, an embodiment in which a SL-BSR is used in a case where measurement information necessary for traffic flow control, regardless of sidelink scheduling mode configuration, is reported to a BS will be described. In the embodiment of FIG. 7B, it is also obvious that the SL-BSR or separate signaling may be used for measurement information report.

Referring to FIG. 7B, in operation 751, the UE (the sidelink relay or the sidelink remote UE) may determine whether it is configured to perform sidelink relay traffic flow control measurement report.

The UE that is configured to perform the sidelink relay traffic flow control measurement report may determine, in operation 753, whether a condition of triggering reporting of sidelink relay traffic flow control measurement is satisfied. An embodiment of a case in which the triggering condition in operation 753 is satisfied may include a case in which the sidelink relay traffic flow control measurement report has to be transmitted as at least one or combination of conditions of [Table 1] is satisfied, and a case in which the sidelink relay traffic flow control measurement report has to be transmitted as sidelink relay traffic flow control measurement report polling is received from the BS.

When the UE determines to transmit the sidelink relay traffic flow control measurement report, the UE may perform, in operation 755, the sidelink relay traffic flow control measurement report by using Solution X.

Solution X indicates that the UE transmits a SL-BSR or separate UL signaling (at least one of (RRC or MAC CE or relay adaption sublayer signaling) so as to report the sidelink relay traffic flow control measurement information. Another example of the separate UL signaling may include a UEAssistancelnformationNR (UAI) message.

The SL-BSR transmitted in operation 755 corresponds to a case of being used for traffic flow control measurement report, and may be separately used from a SL-BSR used in mode 1. The SL-BSR configured for traffic flow control measurement report may be used in a case where mode 1 is configured for the sidelink relay or the sidelink remote UE or a case where mode 2 is configured therefor.

According to an embodiment of the present disclosure, the SL-BSR message configured for traffic flow control measurement report may be differentiated from the normal SL-BSR and thus may be limited to include only buffer size information about a sidelink logic channel group or a sidelink logic channel which is forwarded via the sidelink relay of the sidelink remote UE. That is, the normal SL-BSR message may report buffer size information about a sidelink logic channel group which is forwarded or is not forwarded via the sidelink relay of the sidelink remote UE, and the SL-BSR message configured for traffic flow control measurement report may report only buffer size information about a sidelink logic channel group or a sidelink logic channel which is forwarded via the sidelink relay of the sidelink remote UE.

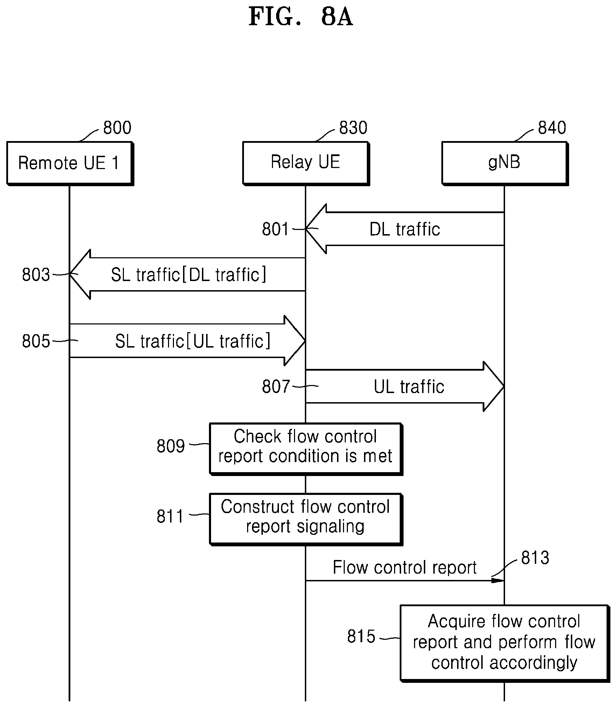

FIGS. 8A to 8B are flowcharts for describing an operation in which a sidelink relay reports information necessary for controlling traffic flow, according to an embodiment of the present disclosure. In particular, FIGS. 8A to 8B describe an example in which measurement information of the sidelink relay is used to control DL traffic flow.

Referring to FIG. 8A, a sidelink remote UE 800 may be connected to a sidelink relay 830, and may perform UL traffic and DL traffic transmission/reception with a gNB 840 via forwarding of the sidelink relay 830. In operation 801, the gNB 840 may relay DL traffic of the sidelink remote UE 800 to the sidelink relay 830, and in operation 803, the sidelink relay 830 may transmit the DL traffic of the sidelink remote UE 800 via a sidelink.

In operation 805, the sidelink remote UE 800 may transmit UL traffic to the sidelink relay 830 via a sidelink, and in operation 807, the sidelink relay 830 may transmit the UL traffic of the sidelink remote UE 800 to the gNB 840.

The sidelink relay 830 configured with sidelink relay traffic flow control measurement report may determine, in operation 809, whether the sidelink relay traffic flow control measurement report is triggered. Information the sidelink relay 830 uses for the determination in operation 809 is as in [Table 1]. According to the information of [Table 1], when it is determined that a triggering condition of the sidelink relay traffic flow control measurement report is satisfied, the sidelink relay 830 configures a sidelink relay traffic flow control measurement report message in operation 811. Information included in the sidelink relay traffic flow control measurement report message may include followings (Table 2).

**[Table 2]**

| |
|---|
| A measurement report message may include at least one or combination of a target of measurement report, or measurement information about a target of measurement report. |
| A target of measurement report may be at least one or combination of a sidelink remote UE, a UL RLC bearer of a sidelink remote UE, a DL RLC bearer of a sidelink remote |
| UE, a sidelink RLC bearer mapped to a UL RLC bearer of a sidelink remote UE, a sidelink RLC bearer mapped to a DL RLC bearer of a sidelink remote UE, a RLC bearer of a sidelink relay corresponding to a UL RLC bearer of a sidelink remote UE, a RLC bearer of a sidelink relay corresponding to a DL RLC bearer of a sidelink remote UE, a sidelink LCH or sidelink LCH group which is mapped to a UL RLC bearer of a sidelink remote UE, or a sidelink LCH or sidelink LCH group which is mapped to a DL RLC bearer of a sidelink remote UE. |
| Measurement information may include at least one or combination of a buffer size or a buffer size level which are about the target of measurement report. |
| Buffer size: this field indicates the maximum traffic volume the TX UE should send. |
| Buffer size level: the total amount of data available according to the data volume calculation procedure (e.g., the tables used in SL BSR or Uu BSR in 3GPP TS38.321) Measurement information may include an indicator of "whether a buffer status for a downstream or upstream is larger than a threshold value (whether the buffer status for downstream or upstream is over a threshold or not)" with respect to the target of measurement report. |

In operation 813, the sidelink relay 830 may transmit, to the gNB 840, the sidelink relay traffic flow control measurement report message configured to include a measurement result associated with [Table 2]. Operations 811 to 813 of the sidelink relay 830 may correspond to one of operations 705 to 707 of FIG. 7A or operations 705 to 709 of FIG. 7A or operation 755 of FIG. 7B.

In operation 815, the gNB 840 may perform traffic flow control via the sidelink relay 830 by using the sidelink relay traffic flow control measurement report message obtained from the sidelink relay 830, a traffic status of the sidelink remote UE 800, and traffic flow control information managed by the gNB 840. As an example of the traffic flow control, the gNB 840 may decrease or increase DL traffic transmission flow to the sidelink remote UE 800 or may control sidelink transmission resource scheduling necessary for traffic transmission from the sidelink relay 830 to the sidelink remote UE 800.

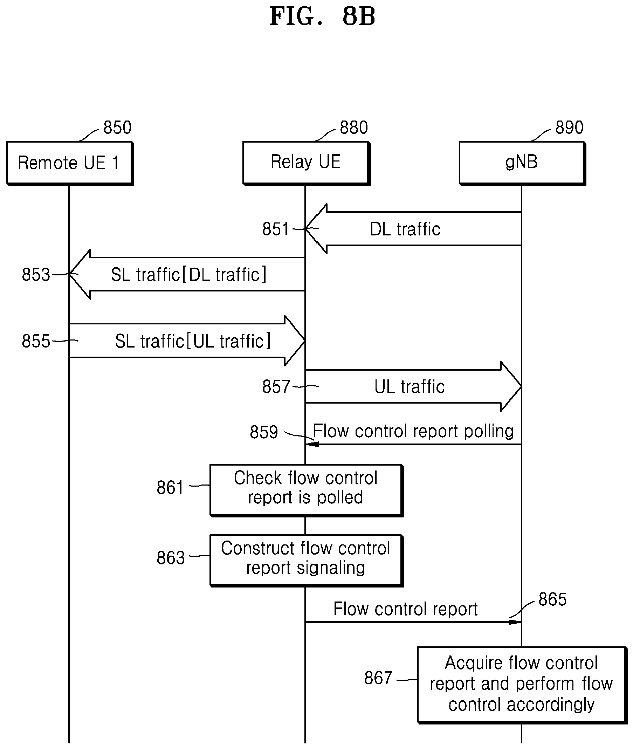

Referring to FIG. 8B, a sidelink remote UE 850 may be connected to a sidelink relay 880, and may perform UL traffic and DL traffic transmission/reception with a gNB 890 via forwarding of the sidelink relay 880. In operation 851, the gNB 890 may relay DL traffic of the sidelink remote UE 850 to the sidelink relay 860, and in operation 853, the sidelink relay 860 may transmit the DL traffic of the sidelink remote UE 850 via a sidelink.

In operation 855, the sidelink remote UE 850 may transmit UL traffic to the sidelink relay 880 via a sidelink, and in operation 857, the sidelink relay 880 may transmit the UL traffic of the sidelink remote UE 850 to the gNB 890.

When it is determined that measurement information necessary for traffic flow control is required, the gNB 890 may transmit, in operation 859, a sidelink relay traffic flow control measurement report polling message to the sidelink relay 880 to transmit sidelink relay traffic flow control measurement report, the sidelink relay 880 being configured with the sidelink relay traffic flow control measurement report.

In operation 861, the sidelink relay 880 may determine that the sidelink relay traffic flow control measurement report is requested, and in operation 863, may configure a sidelink relay traffic flow control measurement report message including a measurement result of [Table 2]. In operation 865, the sidelink relay 880 may transmit the sidelink relay traffic flow control measurement report message to the gNB 890. Operations 863 to 865 of the sidelink relay 880 may correspond to one of operations 705 to 707 of FIG. 7A or operations 705 to 709 of FIG. 7A or operation 755 of FIG. 7B.

In operation 867, the gNB 890 may perform traffic flow control via the sidelink relay 880 by using the sidelink relay traffic flow control measurement report message obtained from the sidelink relay 880, a traffic status of the sidelink remote UE 850, and traffic flow control information managed by the gNB 890. As an example of the traffic flow control, the gNB 890 may decrease or increase DL traffic transmission flow to the sidelink remote UE 850 or may control sidelink transmission resource scheduling necessary for traffic transmission from the sidelink relay 880 to the sidelink remote UE 850.

Information included in the sidelink relay traffic flow control measurement report polling message transmitted from the BS may be the same as in [Table 3]. In order to obtain sidelink relay traffic flow control measurement report information from the sidelink relay or the sidelink remote UE so as to perform traffic flow control with respect to the sidelink remote UE, the BS may configure and transmit a measurement report polling message to the sidelink relay or the sidelink remote UE.

**[Table 3]**

| |
|---|
| A sidelink relay traffic flow control measurement report polling message may use at least one formats from among a control message of a relay adaptation sublayer, an RRC message, and a MAC CE message. When a sidelink relay traffic flow control measurement report polling message is used between a sidelink relay and a sidelink remote UE, at least one formats from among a sidelink RRC message and a sidelink MAC CE message may be used. |
| A sidelink relay traffic flow control measurement report polling message may include at least one or combination of type information indicating sidelink relay traffic flow control measurement report polling, a sidelink remote UE identifier to be included in sidelink relay traffic flow control measurement report, a sidelink RLC bearer of a sidelink remote UE which is to be included in sidelink relay traffic flow control measurement report, or a sidelink logic channel of a sidelink remote UE which is to be included in sidelink relay traffic flow control measurement report. |
| A sidelink logic channel identifier or a Uu logic channel identifier which corresponds to a sidelink relay traffic flow control measurement report polling message may be configured. |

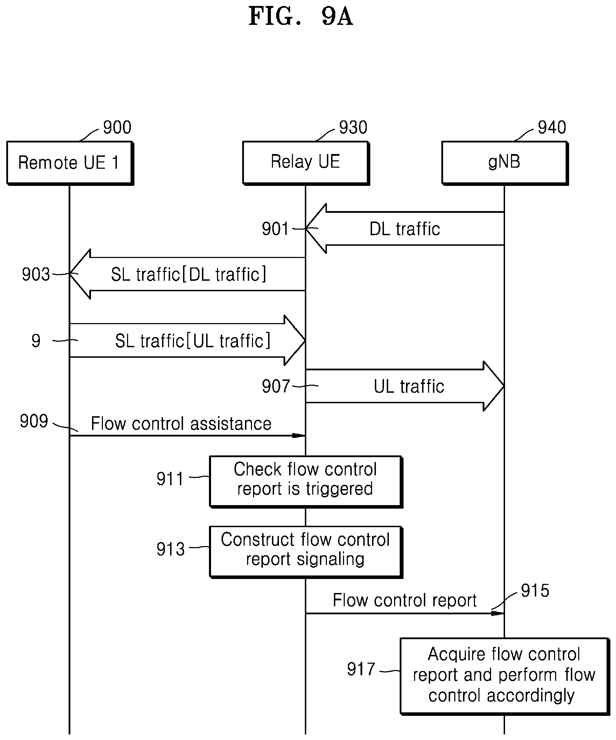

FIGS. 9A to 9B are flowcharts for describing an operation in which a sidelink remote UE reports information necessary for controlling traffic flow, according to an embodiment of the present disclosure. In particular, FIGS. 9A to 9B show examples of a case in which measurement information of the sidelink remote UE is used to control UL traffic flow. The example of FIG. 9A is as below. A sidelink relay may configure measurement information usable for controlling DL traffic flow, the sidelink remote UE may relay a measurement result usable for controlling UL traffic flow to the sidelink relay, and the sidelink relay may gather the measurement result usable for controlling UL traffic flow, which is received from the sidelink remote UE, and a measurement result which is usable for controlling DL traffic flow and is measured by itself and may transmit the gathering to the BS.

Another example of FIG. 9A is as below. The sidelink relay may transmit, to the BS, the measurement result which is usable for controlling DL traffic flow and is measured by itself, and separately from this, may receive, from the sidelink remote UE, the measurement result usable for controlling UL traffic flow and may transmit it to the BS.

Referring to FIG. 9A, a sidelink remote UE 900 is connected to a sidelink relay 930 and may perform UL traffic and DL traffic transmission/reception with a gNB 940 via forwarding of the sidelink relay 930. In operation 901, the gNB 940 may relay DL traffic of the sidelink remote UE 900 to the sidelink relay 930, and in operation 903, the sidelink relay 930 may transmit the DL traffic of the sidelink remote UE 900 via a sidelink.

In operation 905, the sidelink remote UE 900 may transmit UL traffic to the sidelink relay 930 via a sidelink, and in operation 907, the sidelink relay 930 may transmit the UL traffic of the sidelink remote UE 900 to the gNB 940.

The sidelink remote UE 900 is enabled for sidelink relay traffic flow control measurement, and when the sidelink remote UE 900 is configured to report sidelink relay traffic flow control measurement information to the sidelink relay 930 or the gNB 940, the sidelink remote UE 900 may transmit, in operation 909, a message including a sidelink relay traffic flow control measurement result to the sidelink relay 930 via a sidelink. An embodiment of the measurement result of operation 909 may include information of [Table 2]. In operation 911, the sidelink relay 930 may determine whether the sidelink relay traffic flow control measurement report is triggered.

A triggering condition of the sidelink relay traffic flow control measurement report which is used by the sidelink relay 930 in operation 911 may correspond to at least one or a combination of (1), (2), and (3) below.
(1) The triggering condition of the sidelink relay traffic flow control measurement report which is used by the sidelink relay 930 in operation 911 may include triggering conditions (see [Table 1]) of the sidelink relay traffic flow control measurement report which are applied to operation 809.
(2) The triggering condition of the sidelink relay traffic flow control measurement report which is used by the sidelink relay 930 in operation 911 may include whether a sidelink relay traffic flow control measurement report message in operation 909 is received. That is, when the sidelink relay traffic flow control measurement report message in operation 909 is received from the sidelink remote UE 900, the sidelink relay 930 determines that the triggering condition of the sidelink relay traffic flow control measurement report is satisfied.
(3) The triggering condition of the sidelink relay traffic flow control measurement report which is used by the sidelink relay 930 in operation 911 may include a case in which measurement information included in the sidelink relay traffic flow control measurement report message received in operation 909 satisfies the triggering condition of the sidelink relay traffic flow control measurement report (see [Table 1]).

For example, assuming a case in which a sidelink logic channel buffer size of the sidelink remote UE 900 is included as the measurement result included in the sidelink relay traffic flow control measurement report message transmitted from the sidelink remote UE 900, if the sidelink logic channel buffer size of the sidelink remote UE 900 is greater than a configured threshold value, the sidelink relay 930 determines that the triggering condition of the sidelink relay traffic flow control measurement report is satisfied.

In operation 913, the sidelink relay 930 may configure a sidelink relay traffic flow control measurement report message to include the measurement result of [Table 2], and in operation 915, may transmit the configured sidelink relay traffic flow control measurement report message to the gNB 940.

In operation 917, the gNB 940 may perform traffic flow control of a communication system using forwarding of the sidelink relay 930, by using the sidelink relay traffic flow control measurement report message obtained from the sidelink relay 930, a traffic status of the sidelink remote UE 900, and traffic flow control information managed by the gNB 940. In an example of the traffic flow control, the gNB 940 may control sidelink transmission resource scheduling necessary for the sidelink remote UE 900 to transmit UL traffic or may control UL transmission resource scheduling necessary for the sidelink relay 930 to forward the UL traffic of the sidelink remote UE 900.

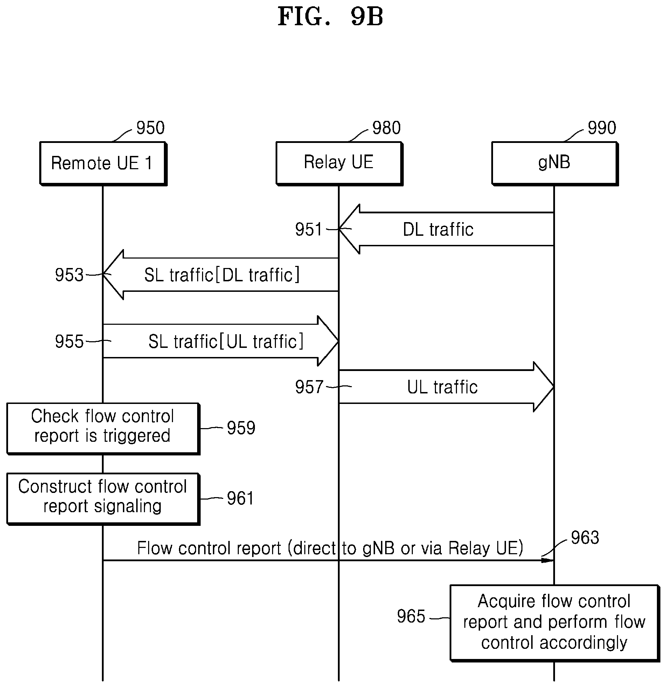

Referring to FIG. 9B, a sidelink remote UE 950 is connected to a sidelink relay 980 and may perform UL traffic and DL traffic transmission/reception with a gNB 990 via forwarding of the sidelink relay 980.

In operation 951, the gNB 990 may relay DL traffic of the sidelink remote UE 990 to the sidelink relay 980, and in operation 953, the sidelink relay 980 may transmit the DL traffic of the sidelink remote UE 950 via a sidelink.

In operation 955, the sidelink remote UE 950 may transmit UL traffic to the sidelink relay 980 via a sidelink, and in operation 957, the sidelink relay 980 may transmit the UL traffic of the sidelink remote UE 950 to the gNB 990.

In operation 959, the sidelink remote UE 950 may determine whether a sidelink relay traffic flow control measurement report is triggered. In operation 959, a triggering condition of determining the measurement report may be configured as in [Table 1]. According to the determining in operation 959, when the sidelink relay traffic flow control measurement report is triggered, the sidelink remote UE 950 may configure a sidelink relay traffic flow control measurement message (see [Table 2]) in operation 961, and may transmit the sidelink relay traffic flow control measurement message to the gNB 990 in operation 963. The sidelink relay traffic flow control measurement message the sidelink remote UE 950 transmits in operation 963 may be directly transmitted to the gNB 990 or may be transmitted to the gNB 990 via forwarding of the sidelink relay 980.

In operation 965, the gNB 990 may perform traffic flow control of a communication system using forwarding of the sidelink relay 980, by using the sidelink relay traffic flow control measurement report message obtained from the sidelink remote UE 950, a traffic status of the sidelink remote UE 950, and traffic flow control information managed by the gNB 990. In an example of the traffic flow control, the gNB 990 may control sidelink transmission resource scheduling necessary for the sidelink remote UE 950 to transmit UL traffic or may control UL transmission resource scheduling necessary for the sidelink relay 980 to forward the UL traffic of the sidelink remote UE 950.

Additionally, in another embodiment in which a sidelink remote UE performs a sidelink relay traffic flow control measurement report, the sidelink remote UE may receive, from a BS or a sidelink relay, a sidelink relay traffic flow control measurement report polling message, and may transmit a sidelink relay traffic flow control measurement report message to the BS or the sidelink relay, based on the polling message. That is, the embodiment of FIG. 8B may be performed by being combined with FIG. 9A or 9B. The polling message may use information of [Table 3], and the measurement report message may use information of [Table 2].

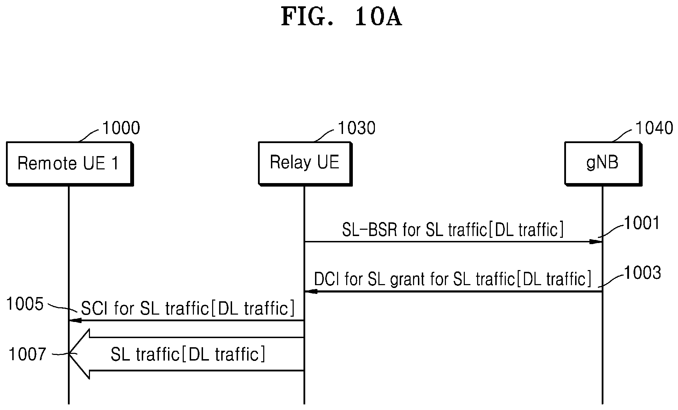

FIGS. 10A to 10B are flowcharts for describing an operation of controlling traffic flow by using sidelink buffer status report signaling, according to an embodiment of the present disclosure.

In an embodiment, a SL-BSR used for sidelink traffic flow control in FIGS. 10A to 10B may use the same format as a normal SL-BSR. Obviously, the present disclosure is not limited to the example, and the SL-BSR used for sidelink traffic flow control in FIGS. 10A to 10B may use a format extended with a different format (a format including an increased number of logic channel groups, a format enabled for report with respect to a logic channel not a logic channel group (LCG), a format with which reporting may be performed for each sidelink remote UE, etc.) so as to particularly report DL traffic flow or UL traffic flow which cannot be determined using the format of the normal SL-BSR.

A BS may configure one or more sidelink remote UEs connected with a sidelink relay with one or more UL RLC channels/DL RLC channels managed by the sidelink relay and one or more UL RLC channels/DL RLC channels which are of the sidelink remote UE and are mapped thereto. The BS may configure one or more UL RLC channels/DL RLC channels managed by the sidelink relay and one or more sidelink RLC channels (configurable for each of DL and UL) which are of one or more sidelink remote UEs and are mapped thereto. The BS may configure a Uu logic channel identifier and a Uu logic channel group identifier mapped to the Uu logic channel identifier corresponding to one or more UL RLC channels/DL RLC channels managed by a sidelink relay.

In an embodiment, the BS may configure a sidelink logic channel identifier and a sidelink logic channel group identifier mapped to the sidelink logic channel identifier corresponding to one or more sidelink RLC channels (configurable for each of DL and UL) managed by the sidelink relay.

In an embodiment, the BS may configure an identifier of a sidelink logic channel group corresponding to one or more sidelink RLC channels (configurable for each of DL and UL) managed by the sidelink relay, and the sidelink relay or a sidelink remote UE may map a sidelink logic channel mapped to the sidelink logic channel group and may report information of the mapping to the BS.

In sidelink direction communication, the BS configures a sidelink logic channel group and a sidelink transmission UE performs an operation of mapping the sidelink logic channel group to a sidelink logic channel. Therefore, when the BS attempts to use a SL-BSR message for sidelink relay traffic flow control, the SL-BSR message reporting a buffer size of the sidelink logic channel group, the BS cannot identify sidelink logic channel information mapped to the reported logic channel group. Therefore, when the BS, the sidelink relay, and the sidelink remote UE attempt to use a SL-BSR for sidelink relay traffic flow control measurement report, a UE (the sidelink relay or the sidelink remote UE) has to perform an operation of reporting information of mapping between the sidelink logic channel group and the sidelink logic channel to the BS.

Referring to FIG. 10A, if a sidelink relay 1030 determines that there is a need for a sidelink transmission resource for transmitting, via a sidelink, DL traffic of a sidelink remote UE 1000 which is received from a gNB 1040, and is enabled to transmit a SL-BSR for requesting the sidelink transmission resource, the sidelink relay 1030 may transmit the SL-BSR to the gNB 1040 in operation 1001. The SL-BSR message may be used in a case where mode1 is configured for the sidelink relay 1030. The SL-BSR message may include buffer size information of a sidelink logic channel group of the sidelink remote UE 1000.

The gNB 1040 may schedule a sidelink transmission resource with respect to the SL-BSR, and may transmit information thereof to the sidelink relay 1030 in operation 1003. The gNB 1040 may determine DL traffic flow control of the sidelink remote UE 1000, based on the buffer size information of the sidelink logic channel group of the sidelink remote UE 1000 which is reported via the SL-BSR. For example, the gNB 1040 may increase or decrease a DL traffic transmission rate, and the gNB 1040 may adjust an amount of sidelink transmission resource allocation which is necessary for the sidelink relay 1030 to forward DL traffic to the sidelink remote UE 1000, or may pre-emptively schedule a sidelink transmission resource to the sidelink relay 1030 without an additional SL-BSR request from the sidelink relay 1030.

The sidelink relay 1030 may transmit, in operation 1005, information indicating traffic transmission to the sidelink remote UE 1000 via the sidelink transmission resource obtained in operation 1003, and may transmit, in operation 1007, DL traffic to the sidelink remote UE 1000 by using the sidelink transmission resource.

In a case where mode2 is configured for the sidelink relay 1030, there is a need for a separate scheme by which the gNB 1040 can receive, from the sidelink relay 1030, a report about whether or how much DL traffic of the sidelink remote UE 1000 is congested, and as described with reference to FIGS. 7A to 7B, the gNB 1040 may obtain, via separate signaling, buffer size information of a sidelink logic channel corresponding to DL of the sidelink remote UE 1000.

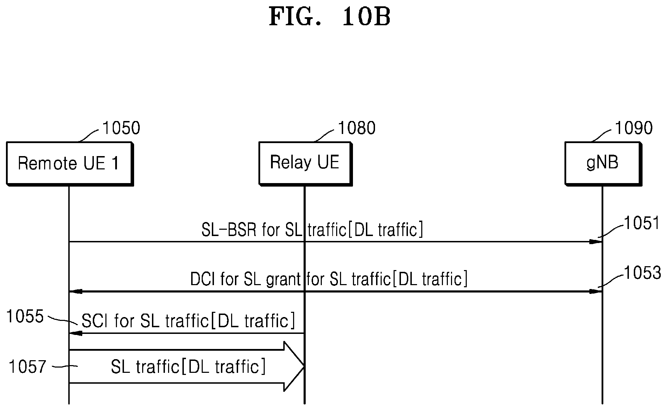

Referring to FIG. 10B, if a sidelink remote UE 1050 determines that UL traffic occurs and thus there is a need for a sidelink transmission resource for transmitting the UL traffic to a sidelink relay 1080 via a sidelink, and determines that it can transmit a SL-BSR for requesting the sidelink transmission resource, the sidelink remote UE 1050 may transmit a SL-BSR message to a gNB 1090 in operation 1051. The SL-BSR message may be used in a case where mode1 is configured for the sidelink remote UE 1050. The SL-BSR message may include buffer size information of a sidelink logic channel group of the sidelink remote UE 1050.

The gNB 1090 may schedule a sidelink transmission resource with respect to the SL-BSR, and may transmit information thereof to the sidelink remote UE 1050 in operation 1053. The gNB 1090 may determine UL traffic flow control of the sidelink remote UE 1050, based on the buffer size information of the sidelink logic channel group of the sidelink remote UE 1050 which is reported via the SL-BSR. For example, the gNB 1090 may increase or decrease a UL traffic transmission rate, and the gNB 1090 may adjust an amount of sidelink transmission resource allocation which is necessary for the sidelink remote UE 1050 to transmit UL traffic to the sidelink relay 1080, or may pre-emptively schedule a sidelink transmission resource to the sidelink remote UE 1050 without an additional SL-BSR request from the sidelink remote UE 1050. The gNB 1090 may adjust an amount of UL transmission resource allocation necessary for the sidelink relay 1080 to forward traffic from the sidelink remote UE 1050 or may pre-emptively schedule a UL transmission resource to the sidelink relay 1080 without a Uu BSR message of the sidelink relay 1080.

The sidelink remote UE 1050 may transmit, in operation 1055, information indicating traffic transmission to the sidelink relay 1080 via the sidelink transmission resource obtained in operation 1053, and may transmit, in operation 1057, UL traffic to the sidelink relay 1080 by using the sidelink transmission resource.

In a case where mode2 is configured for the sidelink remote UE 1050, there is a need for a separate scheme by which the gNB 1090 can receive a report about whether or how much UL traffic of the sidelink remote UE 1050 is congested, and as described with reference to FIGS. 7A to 7B, the gNB 1090 may obtain, via separate signaling, buffer size information of a sidelink logic channel corresponding to UL of the sidelink remote UE 1050.

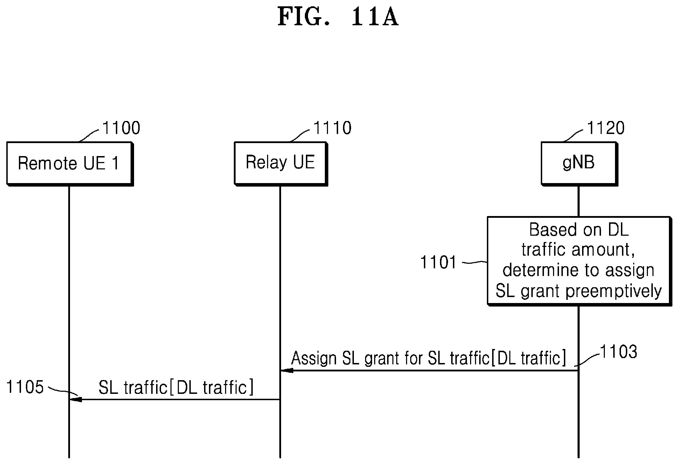

FIGS. 11A to 11C are flowcharts for describing an operation in which a gNB pre-emptively schedules a UL resource or a sidelink resource, according to an embodiment of the present disclosure.

Referring to FIG. 11A, in operation 1101, a gNB 1120 may determine a DL traffic flow status and may determine to control a DL traffic flow. The gNB 1120 may determine the DL traffic flow status, based on sidelink relay traffic flow control measurement reports of a sidelink relay and a sidelink remote UE, a DL traffic status of the sidelink remote UE, etc. according to the various embodiments of FIGS. 6 to 10B.

In an example of a scheme by which the gNB controls the DL traffic flow, the gNB 1120 may determine to pre-emptively allocate a sidelink transmission resource to a sidelink relay 1110 so as to allow the sidelink relay 1110 to transmit DL traffic to a sidelink remote UE 1100 via a sidelink. That is, the sidelink relay 1110 may determine that there is a need for a sidelink transmission resource for transmitting the DL traffic to the sidelink remote UE 1100 via the sidelink, may predict that a message requesting allocation of a sidelink transmission resource is to be transmitted to the gNB 1120, and then may schedule, without a request from the sidelink relay 1110, the sidelink transmission resource determined to be needed for the sidelink relay 1110.

In operation 1103, the gNB 1120 may transmit, to the sidelink relay 1110, allocation information of the sidelink transmission resource to be used by the sidelink relay 1110 to transmit the DL traffic to the sidelink remote UE 1100. In an embodiment, the gNB 1120 may perform transmission by using a normal sidelink (SL)-RNTI or a sidelink configured scheduling (SLCS)-RNTI so as to allow the sidelink relay 1110 not to identify whether the allocated sidelink transmission resource is a pre-emptively allocated sidelink transmission resource.

In another embodiment, the gNB 1120 may perform transmission by using an RNTI indicating a SL relay preemptively scheduled resource so as to allow the sidelink relay 1110 to identify that the allocated sidelink transmission resource is a pre-emptively allocated sidelink transmission resource. The use of the separate RNTI may be limited to the extent that the sidelink relay 1110 can use only for relaying a pre-emptively allocated resource. In operation 1105, the sidelink relay 1110 may transmit the DL traffic to the sidelink remote UE 1100 via the sidelink by using the sidelink transmission resource scheduled from the gNB 1120.

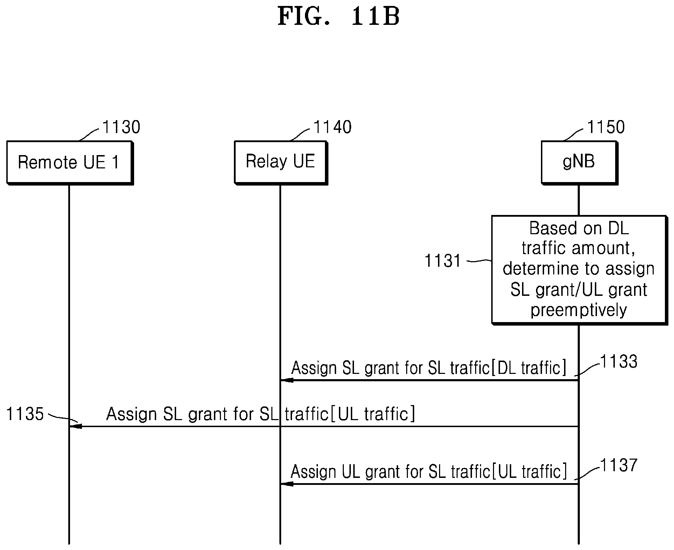

Referring to FIG. 11B, in operation 1131, a gNB 1150 may determine a DL traffic flow status and a UL traffic flow status and may determine to control a DL traffic flow and a UL traffic flow. The gNB 1150 may determine the DL traffic flow status and the UL traffic flow, based on sidelink relay traffic flow control measurement reports of a sidelink relay and a sidelink remote UE, a DL traffic status of the sidelink remote UE, a UL traffic status of the sidelink remote UE, etc. according to the various embodiments of FIGS. 6 to 10B.

In an example of a scheme by which the gNB controls the DL traffic flow, the gNB 1150 may determine to pre-emptively allocate a sidelink transmission resource to a sidelink relay 1140 so as to allow the sidelink relay 1140 to transmit DL traffic to a sidelink remote UE 1130 via a sidelink. That is, even when the sidelink relay 1140 determines to transmit the DL traffic to the sidelink remote UE 1130 via the sidelink and does not transmit a message of requesting the gNB 1150 for a necessary sidelink transmission resource, the gNB may allocate the sidelink transmission resource necessary for the sidelink relay 1140 to transmit the DL traffic to the sidelink remote UE 1130.

In an example of a scheme by which the gNB controls the UL traffic flow, the gNB 1150 may determine to pre-emptively allocate a sidelink transmission resource to the sidelink remote UE 1130 so as to allow the sidelink remote UE 1130 to transmit UL traffic to the sidelink relay 1140 via a sidelink. This case may be limited to only a case where mode1 is configured for the sidelink remote UE 1130. That is, even when the sidelink remote UE 1130 determines to transmit its UL traffic and does not transmit a message of requesting the gNB 1150 for a sidelink transmission resource necessary for transmitting the UL traffic to the sidelink relay 1140 via a sidelink, the gNB may allocate a sidelink transmission resource necessary for the sidelink remote UE 1130 to transmit the UL traffic to the sidelink relay 1140.

In another embodiment of controlling a UL traffic flow, the gNB 1150 may determine to pre-emptively allocate a sidelink transmission resource to the sidelink relay 1140, the sidelink transmission resource being necessary for the sidelink relay 1140 to transmit UL traffic of the sidelink remote UE 1130 to the gNB 1150. That is, even when the sidelink relay 1140 receives the UL traffic from the sidelink remote UE 1130 via a sidelink, determines to forward the UL traffic to the gNB 1150, and does not transmit a message of requesting the gNB 1150 for a necessary UL transmission resource, the gNB may allocate the UL transmission resource necessary for the sidelink relay 1140 to transmit the UL traffic of the sidelink remote UE 1130.

In operation 1133, the gNB 1150 may pre-emptively transmit, to the sidelink relay 1140, sidelink transmission resource allocation information to be used by the sidelink relay 1140 to transmit DL traffic to the sidelink remote UE 1130. In an embodiment, the gNB 1150 may perform transmission by using a normal SL-RNTI or a SLCS-RNTI so as to allow the sidelink relay 1140 not to identify whether the allocated sidelink transmission resource is a pre-emptively allocated sidelink transmission resource.

In another embodiment, the gNB 1150 may perform transmission by using an RNTI indicating a SL relay preemptively scheduled resource so as to allow the sidelink relay 1140 to identify that the allocated sidelink transmission resource is a pre-emptively allocated sidelink transmission resource. The use of the separate RNTI may be limited to the extent that the sidelink relay 1140 can use only for relaying a pre-emptively allocated resource.

The sidelink relay 1140 may transmit the DL traffic to the sidelink remote UE 1130 via a sidelink by using the sidelink transmission resource scheduled from the gNB 1150. In operation 1135, the gNB 1150 may transmit, to the sidelink remote UE 1130, sidelink transmission resource allocation information to be used by the sidelink remote UE 1130 to transmit UL traffic of the sidelink remote UE 1130.

In an embodiment, the gNB 1150 may perform transmission by using a normal SL-RNTI or a SLCS-RNTI so as to allow the sidelink remote UE 1130 not to identify whether the allocated sidelink transmission resource is a pre-emptively allocated sidelink transmission resource.

In another embodiment, the gNB 1150 may perform transmission by using an RNTI indicating a SL relay preemptively scheduled resource so as to allow the sidelink remote UE 1130 to identify that the allocated sidelink transmission resource is a pre-emptively allocated sidelink transmission resource. The use of the separate RNTI may be limited to the extent that the sidelink remote UE 1130 can use only for relaying a pre-emptively allocated resource.

The sidelink remote UE 1130 may transmit its UL traffic to the sidelink relay 1140 by using the sidelink transmission resource via a sidelink. In operation 1137, the gNB 1150 may pre-emptively transmit, to the sidelink relay 1140, UL transmission resource allocation information to be used in transmitting the UL traffic of the sidelink remote UE 1130. In an embodiment, the gNB 1150 may perform transmission by using a normal C-RNTI, a MCS-C-RNTI, or a CS-RNTI so as to allow the sidelink relay 1140 not to identify whether the allocated UL transmission resource is a pre-emptively allocated UL transmission resource.

In another embodiment, the gNB 1150 may perform transmission by using an RNTI indicating a Relay preemptively scheduled resource so as to allow the sidelink relay 1140 to identify that the allocated UL transmission resource is a pre-emptively allocated UL transmission resource. The use of the separate RNTI may be limited to the extent that the sidelink relay 1140 can use only for relaying a pre-emptively allocated resource. The sidelink relay 1140 may transmit the UL traffic of the sidelink remote UE 1130 to the gNB 1150 by using the UL transmission resource.

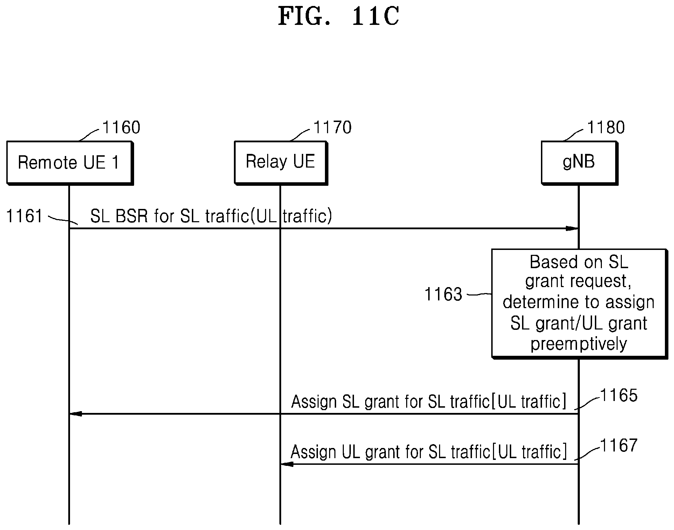

Referring to FIG. 11C, in an embodiment, in operation 1161, a sidelink remote UE 1160 may transmit, to a gNB 1180, a SL-BSR for requesting a transmission resource for transmitting UL traffic to a sidelink relay 1170 via a sidelink. An operation performed in operation 1161 may be applied to a case where mode 1 is configured for the sidelink remote UE 1160.

In operation 1163, the gNB 1180 may determine sidelink transmission resource scheduling, based on the SL-BSR. In operation 1165, the gNB 1180 may transmit, to the sidelink remote UE 1160, sidelink transmission resource allocation information necessary for transmitting the UL traffic to the sidelink relay 1170 via a sidelink. In another embodiment, in operation 1161, the sidelink remote UE 1160 may transmit a SL-BSR to the gNB 1180 for sidelink relay traffic flow control measurement report.

In operation 1163, the gNB 1180 may determine, based on the SL-BSR, to pre-emptively allocate, to the sidelink remote UE 1160, a sidelink transmission resource necessary for transmitting the UL traffic to the sidelink relay 1170 via a sidelink. That is, even when the sidelink remote UE 1160 determines to transmit its UL traffic and does not transmit a message of requesting the gNB 1180 for a sidelink transmission resource necessary for transmitting the UL traffic to the sidelink relay 1170 via a sidelink, the gNB may allocate the sidelink transmission resource necessary for the sidelink remote UE 1160 to transmit the UL traffic to the sidelink relay 1170.

In operation 1165, the gNB 1180 may transmit sidelink transmission resource allocation information to the sidelink remote UE 1160. In an embodiment, the gNB 1180 may perform transmission by using a normal SL-RNTI or a SLCS-RNTI so as to allow the sidelink remote UE 1160 not to identify whether the allocated sidelink transmission resource is a pre-emptively allocated sidelink transmission resource. In another embodiment, the gNB 1180 may perform transmission by using an RNTI indicating a SL relay preemptively scheduled resource so as to allow the sidelink remote UE 1160 to identify that the allocated sidelink transmission resource is a pre-emptively allocated sidelink transmission resource. The use of the separate RNTI may be limited to the extent that the sidelink remote UE 1160 can use only for relaying a pre-emptively allocated resource.

In operation 1163, the gNB 1180 may determine to pre-emptively allocate a UL transmission resource necessary for the sidelink relay 1170, which has received the UL traffic of the sidelink remote UE 1160, to forward the UL traffic. That is, even when the sidelink relay 1170 has received the UL traffic from the sidelink remote UE 1160 via a sidelink, determines to forward the UL traffic to the gNB 1180, and does not transmit a message of requesting the gNB 1180 for a necessary UL transmission resource, the gNB 1180 may allocate a UL transmission resource necessary for the sidelink relay 1170 to transmit the UL traffic of the remote UE 1160.

In operation 1167, the gNB 1180 may pre-emptively transmit, to the sidelink relay 1170, UL transmission resource allocation information necessary for transmitting the UL traffic of the remote UE 1160. In an embodiment, the gNB 1180 may perform transmission by using a normal C-RNTI, a MCS-C-RNTI, or a CS-RNTI so as to allow the sidelink relay 1170 not to identify whether the allocated UL transmission resource is a pre-emptively allocated UL transmission resource. In another embodiment, the gNB 1180 may perform transmission by using an RNTI indicating a Relay preemptively scheduled resource so as to allow the sidelink relay 1170 to identify that the allocated UL transmission resource is a pre-emptively allocated UL transmission resource. The use of the separate RNTI may be limited to the extent that the sidelink relay 1170 can use only for relaying a pre-emptively allocated resource.

FIGS. 12A to 12C are flowcharts for describing an operation in which a gNB pre-emptively schedules a UL resource or a sidelink resource by using pre-emptive resource request report signaling of a sidelink relay or a sidelink remote UE, according to an embodiment of the present disclosure.

Referring to FIG. 12A, in operation 1201, a sidelink relay 1210 may receive UL traffic of a sidelink remote UE 1200 transmitted from the sidelink remote UE 1200 via a sidelink. In an embodiment, the sidelink relay 1210 may transmit a message of requesting a UL transmission resource to a gNB 1220 so as to forward the UL traffic of the sidelink remote UE 1200 to the gNB 1220. In another embodiment, the sidelink relay 1210 may forward the UL traffic of the sidelink remote UE 1200 to the gNB 1220 by using an available UL resource pre-scheduled by the gNB 1220, and may determine to pre-emptively request the gNB 1220 for a UL resource for transmitting additional UL traffic predicted to be received via a sidelink in succession of the UL traffic of the sidelink remote UE 1200, in operation 1203.

According to the determining in operation 1203, the sidelink relay 1210 may transmit a pre-emptive UL transmission resource request message to the gNB 1220 in operation 1205. The use of the pre-emptive UL transmission resource request message transmitted by the sidelink relay 1210 may be as in [Table 4].

**[Table 4]**

| |
|---|
| Pre-emptive BSR: It is a pre-defined pre-emptive BSR, and may use an LCID identifier indicating a pre-emptive BSR. |
| Relay pre-emptive BSR: It corresponds to a preemptive BSR defined for a sidelink relay, and may use an LCID identifier (defined as new code point/index) separate from a pre-emptive BSR. |
| A sidelink relay may be configured to use a pre-emptive BSR or a relay pre-emptive BSR. |
| A sidelink relay may be configured with a logic channel or a logic channel group which can use a pre-emptive BSR or a relay pre-emptive BSR. The logic channel and the logic channel group correspond to a logic channel and a logic channel group which are configured to relay UL traffic of a sidelink remote UE. |

In operation 1205, the sidelink relay 1210 may transmit a pre-emptive BSR or a relay pre-emptive BSR to the gNB 1220. When the gNB 1220 receives the pre-emptive BSR or the relay pre-emptive BSR from the sidelink relay 1210, the gNB 1220 may schedule a UL resource necessary for the sidelink relay 1210 to forward UL traffic of the sidelink remote UE 1200, and may schedule a sidelink transmission resource necessary for the sidelink remote UE 1200 to transmit UL traffic to the sidelink relay 1210 via a sidelink. A case where the gNB 1220 pre-emptively schedules a sidelink transmission resource to the sidelink remote UE 1200 corresponds to a case where mode1 is configured for the sidelink remote UE 1200.

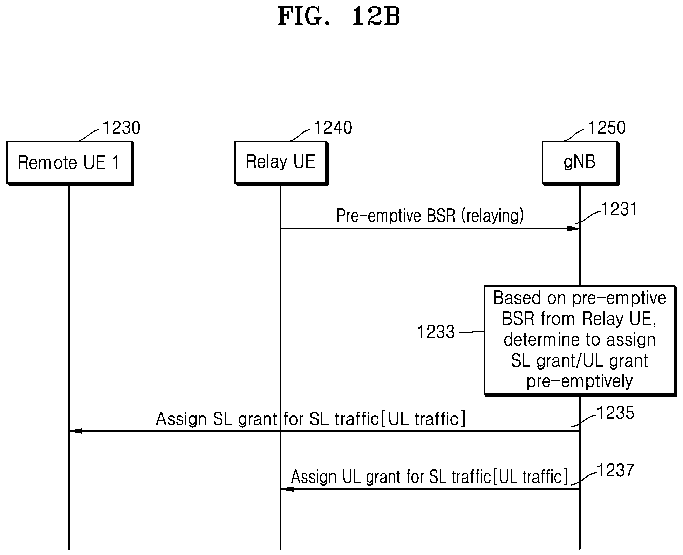

Referring to FIG. 12B, in order to pre-emptively request a UL transmission resource, a sidelink relay 1240 may transmit a pre-emptive BSR or a relay pre-emptive BSR (see [Table 4]) to a gNB 1250 in operation 1231. When the sidelink relay 1240 determines that the pre-emptive UL transmission resource request is necessary, the sidelink relay 1240 may perform the determination, based on UL traffic transmitted from a sidelink remote UE 1230 or a sidelink relay traffic flow control measurement report message transmitted from the sidelink remote UE 1230.

For example, the sidelink relay 1240 may receive the sidelink relay traffic flow control measurement report message from the sidelink remote UE 1230 as in operation 909 of FIG. 9A, and may predict, based on UL traffic buffer status information of the sidelink remote UE 1230, that UL traffic is to be transmitted from the sidelink remote UE 1230 via a sidelink and forwarding of the UL traffic to the gNB 1250 is requested. When the gNB 1250 receives the pre-emptive BSR or the relay pre-emptive BSR from the sidelink relay 1240, the gNB 1250 may schedule a UL resource necessary for the sidelink relay 1240 to forward the UL traffic buffer status information of the sidelink remote UE 1230, by using the sidelink relay traffic flow control measurement report message, a UL traffic status of the sidelink remote UE 1230, a DL traffic status of the sidelink remote UE 1230, etc. which are gathered by the gNB 1250, and may schedule a sidelink transmission resource necessary for the sidelink remote UE 1230 to transmit the UL traffic to the sidelink relay 1240 via a sidelink.

A case where the gNB 1250 pre-emptively schedules a sidelink transmission resource to the sidelink remote UE 1230 corresponds to a case where mode1 is configured for the sidelink remote UE 1230. In operation 1235, the gNB 1250 may transmit, to the sidelink remote UE 1230, sidelink transmission resource allocation information necessary for transmitting the UL traffic to the sidelink relay 1240 via a sidelink. In operation 1237, the gNB 1250 may transmit, to the sidelink relay 1240, UL transmission resource allocation information necessary for forwarding the UL traffic of the sidelink remote UE 1230 to the gNB 1250.

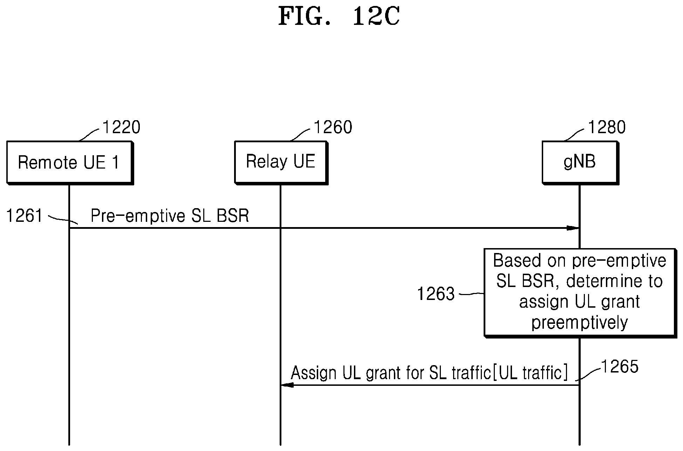

Referring to FIG. 12C, in operation 1261, a sidelink remote UE 1260 may transmit a pre-emptive SL BSR message to request a gNB 1280 for pre-emptive allocation of a sidelink transmission resource. In an embodiment, a pre-emptive SL BSR for pre-emptively requesting the transmission resource may be used only when mode1 is not configured but mode2 is configured for the sidelink remote UE 1260.

The pre-emptive SL BSR may be used to request the gNB 1280 to pre-emptively allocate a UL transmission resource to a sidelink relay 1270, the UL transmission resource being necessary for the sidelink relay 1270 to forward, to the gNB 1280 via a UL, UL traffic of the sidelink remote UE 1260 which is transmitted to the sidelink relay 1270 via a sidelink. In another embodiment, a pre-emptive SL BSR for pre-emptively requesting the transmission resource may be used when mode1 is configured for the sidelink remote UE 1260.

The pre-emptive SL BSR may be used to request the gNB 1280 to pre-emptively allocate a UL transmission resource to the sidelink relay 1270, the UL transmission resource being necessary for the sidelink relay 1270 to forward, to the gNB 1280 via a UL, UL traffic of the sidelink remote UE 1260 which is transmitted to the sidelink relay 1270 via a sidelink.

When mode1 is configured for the sidelink remote UE 1260, the sidelink remote UE 1260 may transmit, to the gNB 1280, a sidelink transmission resource request message (SL-BSR) for transmitting the UL traffic of the sidelink remote UE 1260 to the sidelink relay 1270. When the gNB 1280 receives the pre-emptive SL BSR from the sidelink remote UE 1260, the gNB 1280 may schedule a UL resource necessary for the sidelink relay 1270 to forward the UL traffic of the sidelink remote UE 1260, by using a sidelink relay traffic flow control measurement report message, a UL traffic status of the sidelink remote UE 1260, a DL traffic status of the sidelink remote UE 1260, etc. which are gathered by the gNB 1280.

When mode1 is configured for the sidelink remote UE 1260, the gNB 1280 may obtain UL traffic buffer size information of the sidelink remote UE 1260 via a SL-BSR message transmitted from sidelink remote UE 1260 to the gNB 1280, and the information may be used as assistance information with which the gNB 1280 schedules a UL resource to the sidelink relay 1270. In operation 1265, the gNB 1280 may transmit, to the sidelink relay 1270, UL transmission resource allocation information necessary for forwarding the UL traffic of the sidelink remote UE 1260 to the gNB 1280.

When the sidelink relay pre-emptively requests the gNB for a UL resource, the sidelink relay may determine a necessity of a pre-emptive UL transmission resource request, based on at least one or combination of sidelink transmission control information (sidelink control information (SCI), i.e., configuration of formats of SCI 1-A, SCI 2-A, and SCI 2-B) and a sidelink MAC PDU (e.g., a header of a MAC PDU) which are received from the sidelink remote UE. Hereinafter, according to an embodiment of the present disclosure, an operation in which the sidelink relay determines the pre-emptive UL transmission resource request, based on the sidelink transmission control information (SCI) and the sidelink MAC PDU (e.g., the header of the MAC PDU) will now be described.

A UE that performs sidelink transmission/reception, i.e., a transmission UE, may transmit sidelink transmission control information (SCI) configured of information such as a transmission UE identifier, a reception UE identifier, a cast type, etc., and a sidelink MAC PDU (e.g., a header of a MAC PDU), and a reception UE may determine whether there is data corresponding to the reception UE, based on the information such as the transmission UE identifier, the reception UE identifier, the cast type, etc. which are obtained by decoding the sidelink transmission control information and the sidelink MAC PDU (the header of the MAC PDU).

Therefore, a sidelink relay corresponding to the reception UE may determine a sidelink remote UE corresponding to the transmission UE, based on the information such as the transmission UE identifier, the reception UE identifier, the cast type, etc. which are included in the sidelink transmission control information and the sidelink MAC PDU (the header of the MAC PDU), may determine that it is data being relayed to the sidelink relay corresponding to the reception UE, and may determine that it is UL data of the sidelink remote UE which has to be relay-transmitted to a BS, based on a logic channel identifier included in the sidelink MAC PDU (the header of the MAC PDU).

The sidelink relay corresponding to the reception UE may obtain, from the sidelink transmission control information, multiple resource reservation (Resource reservation period) information, HARQ process number (HARQ process ID) information, time resource assignment/frequency resource assignment information, etc.

Based on at least one or combination of HARQ process number (HARQ process ID), multiple resource reservation, time resource assignment/frequency resource assignment, SRC ID, DST ID, cast type included in the sidelink transmission control information and SRC ID, DST ID, logical channel ID included in the sidelink MAC PDU (the header of the MAC PDU), the sidelink relay corresponding to the reception UE may determine that multiple transmission resources for transmitting UL data of the sidelink remote UE are pre-selected by the sidelink remote UE, may predict that the sidelink remote UE can transmit UL data to the sidelink relay UE by using at least one of pre-selected sidelink transmission resources, may determine that there is a need for a UL transmission resource for relay-transmitting the UL data to a BS, the UL data being transmitted from the sidelink remote UE, and may determine to transmit a pre-emptive UL transmission resource request for pre-emptively requesting the BS for a UL transmission resource although the UL data is not yet received from the sidelink remote UE.

When the sidelink relay receives the sidelink transmission control information and information of the sidelink MAC PDU (the header of the MAC PDU) from the sidelink remote UE, the sidelink relay may perform the determination and the prediction described above, based on the sidelink transmission control information and the sidelink MAC PDU (the header of the MAC PDU).

Afterward, based on the sidelink transmission control information and the sidelink MAC PDU (the header of the MAC PDU), the sidelink relay may predict a sidelink MAC PDU that may be received from the sidelink remote UE on a pre-selected next transmission UE. The sidelink relay may configure buffer status information to be included in a message of requesting the BS for a pre-emptive UL transmission resource, and in this regard, the sidelink relay may predict a size of a sidelink MAC PDU that may be received on the pre-selected next transmission resource from the sidelink remote UE, based on time resource assignment/frequency resource assignment of the received sidelink transmission control information (SCI) and a size of the received MAC PDU, and may predict a buffer size to be configured in the pre-emptive UL transmission resource request message.

A case where the sidelink transmission control information transmitted from the sidelink remote UE is configured with multiple resource reservation information is as below. In a case where the sidelink remote UE corresponding to the transmission UE determines that data to be transmitted is configured of one or more MAC PDUs, when the sidelink remote UE selects a sidelink transmission resource, the sidelink remote UE may pre-select resources for transmitting multiple MAC PDUs corresponding to random logic channels.

According to an embodiment of the present disclosure, when the sidelink remote UE corresponding to the transmission UE pre-selects transmission resources, the transmission resources may be selected at regular intervals. However, the present disclosure is not limited to the example above, and the transmission resources may be selected based on a preset standard, not the regular intervals.

The sidelink remote UE corresponding to the transmission UE may determine that there is a need for transmitting multiple MAC PDUs and thus may include information of pre-selected transmission resources in sidelink transmission control information, and may configure the information of the pre-selected transmission resources in a "Resource reservation period" field corresponding to multiple resource reservation information, and a time resource assignment/frequency resource assignment field. The sidelink remote UE may configure "Resource reservation period" of the sidelink transmission control information with a value of a sl-ResourceReservePeriodList parameter.

An operation in which the sidelink remote UE corresponding to the transmission UE selects a sidelink transmission resource, configures HARQ process ID mapping corresponding to the sidelink transmission resource, configures sidelink process ID mapping, configures a MAC PDU to be transmitted, by using the sidelink transmission resource and HARQ process ID, and configures sidelink transmission control information (SCI), and configuration of the sidelink transmission control information are as in Table 5 and Table 6. According to an embodiment of the present disclosure, the sidelink remote UE may select one or more sidelink transmission resources for multiple sidelink resource reservation, and may configure sidelink transmission control information including information of the selected one or more sidelink transmission resources.

**[Table 5]**

| |
|---|
| When a transmission UE has data to be transmitted via a sidelink, in particular, when the transmission UE needs to transmit the data by configuring the data with one or more MAC PDUs, the transmission UE may process an operation of selecting a sidelink transmission resource, mapping the selected sidelink transmission resource to a HARQ process index, and mapping the transmission UE, a reception UE, cast type information, etc. of the data to be transmitted on the selected sidelink transmission resource. |
| // An operation of selecting a resource for transmitting sidelink data, when a resource for transmitting one or more MAC PDUs is selected, one or more transmission resources may be selected at resource reservation intervals by using a sl-ResourceReservePeriodList parameter. |
| 1> if the MAC entity has selected to create a selected sidelink grant corresponding to transmissions of multiple MAC PDUs, and SL data is available in a logical channel: (if the MAC entity has selected to create a selected sidelink grant corresponding to transmissions of multiple MAC PDUs, and SL data is available in a logical channel:) |
| 2> if the TX resource (re-)selection is triggered as the result of the TX resource (re-)selection check: (if the TX resource (re-)selection is triggered as the result of the TX resource (re-)selection check:) |
| 3> select one of the allowed values configured by RRC in sl-ResourceReservePeriodList and set the resource reservation interval, *P*_rsvp_TX, with the selected value; (select one of the allowed values configured by RRC in sl-ResourceReservePeriodList and set the resource reservation interval, *P*_rsvp_TX, with the selected value;) |
| NOTE 3A: The MAC entity selects a value for the resource reservation interval which is larger than the remaining PDB (packet delay budget) of SL data available in the logical channel. (The MAC entity selects a value for the resource reservation interval which is larger than the remaining PDB of SL data available in the logical channel.) |

3> randomly select, with equal probability, an integer value in the interval [5, 15] for the resource reservation interval higher than or equal to 100ms or in the interval 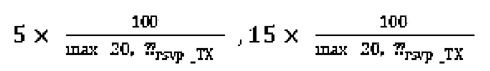 for the resource reservation interval lower than 100ms and set SL_RESOURCE_RESELECTION_COUNTER to the selected value; (randomly select, with equal probability, an integer value in the interval [5, 15] for the resource reservation interval higher than or equal to 100ms or in the interval 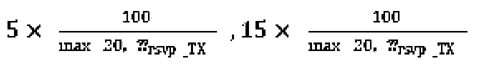 for the resource reservation interval lower than 100ms and set SL_RESOURCE_RESELECTION_COUNTER to the selected value;)
3> select the number of HARQ retransmissions from the allowed numbers that are configured by RRC in sl-MaxTxTransNumPSSCH included in sl-PSSCH-TxConfigList and, if configured by RRC, overlapped in sl-MaxTxTransNumPSSCH indicated in sl-CBR-PriorityTxConfigList for the highest priority of the logical channel(s) allowed on the carrier and the CBR measured by lower layers according to clause 5.1.27 of TS 38.215 if CBR measurement results are available or the corresponding sl-defaultTxConfiglndex configured by RRC if CBR measurement results are not available; (select the number of HARQ retransmissions from the allowed numbers that are configured by RRC in sl-MaxTxTransNumPSSCH included in sl-PSSCH-TxConfigList and, if configured by RRC, overlapped in sl-MaxTxTransNumPSSCH indicated in sl-CBR-PriorityTxConfigList for the highest priority of the logical channel(s) allowed on the carrier and the CBR measured by lower layers according to clause 5.1.27 of TS 38.215 if CBR measurement results are available or the corresponding sl-defaultTxConfigIndex configured by RRC if CBR measurement results are not available;)
3> select an amount of frequency resources within the range that is configured by RRC between sl-MinSubChannelNumPSSCH and sl-MaxSubchannelNumPSSCH included in sl-PSSCH-TxConfigList and, if configured by RRC, overlapped between MinSubChannelNumPSSCH and MaxSubchannelNumPSSCH indicated in sl-CBR-PriorityTxConfigList for the highest priority of the logical channel(s) allowed on the carrier and the CBR measured by lower layers according to clause 5.1.27 of TS 38.215 if CBR measurement results are available or the corresponding sl-defaultTxConfigIndex configured by RRC if CBR measurement results are not available; (select an amount of frequency resources within the range that is configured by RRC between sl-MinSubChannelNumPSSCH and sl-MaxSubchannelNumPSSCH included in sl-PSSCH-TxConfigList and, if configured by RRC, overlapped between MinSubChannelNumPSSCH and MaxSubchannelNumPSSCH indicated in sl-CBR-PriorityTxConfigList for the highest priority of the logical channel(s) allowed on the carrier and the CBR measured by lower layers according to clause 5.1.27 of TS 38.215 if CBR measurement results are available or the corresponding sl-defaultTxConfigIndex configured by RRC if CBR measurement results are not available;)
3> randomly select the time and frequency resources for one transmission opportunity from the resources indicated by the physical layer as specified in clause 8.1.4 of TS 38.214, according to the amount of selected frequency resources and the remaining PDB of SL data available in the logical channel(s) allowed on the carrier (randomly select the time and frequency resources for one transmission opportunity from the resources indicated by the physical layer as specified in clause 8.1.4 of TS 38.214, according to the amount of selected frequency resources and the remaining PDB of SL data available in the logical channel(s) allowed on the carrier.)
3> use the selected sidelink grant to determine the set of PSCCH durations and the set of PSSCH durations according to TS 38.214 (use the selected sidelink grant to determine the set of PSCCH durations and the set of PSSCH durations according to TS 38.214.)
3> reuse the previously selected sidelink grant for the number of transmissions of the MAC PDUs determined in TS 38.214 with the resource reservation interval to determine the set of PSCCH durations and the set of PSSCH durations according to TS 38.214. (reuse the previously selected sidelink grant for the number of transmissions of the MAC PDUs determined in TS 38.214 with the resource reservation interval to determine the set of PSCCH durations and the set of PSSCH durations according to TS 38.214.)
// an operation of mapping a HARQ process index to use a selected transmission resource
2> if the configured sidelink grant has been activated and this PSSCH duration corresponds to the first PSSCH transmission opportunity within this sl-PeriodCG of the configured sidelink grant:) if the configured sidelink grant has been activated and this PSSCH duration corresponds to the first PSSCH transmission opportunity within this sl-PeriodCG of the configured sidelink grant:)
3> set the HARQ Process ID to the HARQ Process ID associated with this PSSCH duration and, if available, all subsequent PSSCH duration(s) occuring in this sl-PeriodCG for the configured sidelink grant (set the HARQ Process ID to the HARQ Process ID associated with this PSSCH duration and, if available, all subsequent PSSCH duration(s) occuring in this sl-PeriodCG for the configured sidelink grant;)
3> determine that this PSSCH duration is used for initial transmission;
3> flush the HARQ buffer of Sidelink process associated with the HARQ Process ID.
2> deliver the sidelink grant, the selected MCS, and the associated HARQ information to the Sidelink HARQ Entity for this PSSCH duration.
For configured sidelink grants, the HARQ Process ID associated with the first slot of a SL transmission is derived from the following equation:
HARQ Process ID = [floor(CURRENT_slot / PeriodicitySL}] modulo sl-N rOfHARQ-Processes + sl-HARQ-ProcID-offset
where CURRENT_slot refers to current logical slot in the associated resource pool, and PeriodicitySL is defined in clause 5.8.3.
// a sidelink remote UE corresponding to the transmission UE may perform an operation of mapping sidelink process ID to HARQ process ID corresponding to the selected sidelink transmission resource, and may configure "Sidelink transmission information of the TB for the source and destination pair of the MAC PDU".
3> if a MAC PDU to transmit has been obtained:
4> if a HARQ Process ID has been set for the sidelink grant (if a HARQ Process ID has been set for the sidelink grant):
5> (re-)associate the HARQ Process ID corresponding to the sidelink grant to the Sidelink process ((re-)associate the HARQ Process ID corresponding to the sidelink grant to the Sidelink process);
NOTE 1a: There is one-to-one mapping between a HARQ Process ID and a Sidelink process in the MAC entity configured with Sidelink resource allocation mode 1 (There is one-to-one mapping between a HARQ Process ID and a Sidelink process in the MAC entity configured with Sidelink resource allocation mode 1).
4> determines Sidelink transmission information of the TB for the source and destination pair of the MAC PDU as follows (determines Sidelink transmission information of the TB for the source and destination pair of the MAC PDU as follows):
5> set the Source Layer-1 ID to the 8 LSB of the Source Layer-2 ID of the MAC PDU (set the Source Layer-1 ID to the 8 LSB of the Source Layer-2 ID of the MAC PDU);
5> set the Destination Layer-1 ID to the 16 LSB of the Destination Layer-2 ID of the MAC PDU (set the Destination Layer-1 ID to the 16 LSB of the Destination Layer-2 ID of the MAC PDU);
5> (re-)associate the Sidelink process to a Sidelink process ID ((re-)associate the Sidelink process to a Sidelink process ID);
NOTE 1b: (How UE determine Sidelink process ID in SCI is left to UE implementation for NR sidelink)How UE determine Sidelink process ID in SCI is left to UE implementation for NR sidelink.

| | |
|---|---|
| //Sidelink transmission information may include information below, and the information may be transferred to a physical layer of a sidelink remote UE corresponding to the transmission UE for the sidelink remote UE to configure sidelink transmission control information (SCI). The sidelink transmission control information (SCI) may include SCI 1-A, SCI 2-A, SCI 2-B. | |
| Sidelink transmission information: Sidelink transmission information included in a SCI for a SL-SCH transmission as specified in clause 8.3 and 8.4 of TS 38.212 consists of | |
| Sidelink HARQ information including NDI, RV, Sidelink process ID, HARQ feedback enabled/disabled indicator, Sidelink identification information including cast type indicator, Source Layer-1 ID and Destination Layer-1 ID, and Sidelink other information including CSI request, a priority, a communication range requirement and Zone ID (Sidelink transmission information: Sidelink transmission information included in a SCI for a SL-SCH transmission as specified in clause 8.3 and 8.4 of TS 38.212 consists of Sidelink HARQ information including NDI, RV, Sidelink process ID, HARQ feedback enabled/disabled indicator, Sidelink identification information including cast type indicator, Source Layer-1 ID and Destination Layer-1 ID, and Sidelink other information including CSI request, a priority, a communication range requirement and Zone ID). | |

**[Table 6]**

| | |
|---|---|
| // An operation in which the transmission UE configures sidelink transmission control information (SCI 1-A, SCI 2-A, SCI 2-B) and a parameter included in the sidelink transmission control information (SCI 1-A, SCI 2-A, SCI 2-B) | |
| A UE can be provided a number of symbols in a resource pool, by *sl-TimeResourcePSCCH,* starting from a second symbol that is available for SL transmissions in a slot, and a number of PRBs in the resource pool, by *sl-FreqResourcePSCCH,* starting from the lowest PRB of the lowest sub-channel of the associated PSSCH, for a PSCCH transmission with a SCI format 1-A. (A UE can be provided a number of symbols in a resource pool, by *sl-TimeResourcePSCCH,* starting from a second symbol that is available for SL transmissions in a slot, and a number of PRBs in the resource pool, by *sl-FreqResourcePSCCH,* starting from the lowest PRB of the lowest sub-channel of the associated PSSCH, for a PSCCH transmission with a SCI format 1-A.) | |
| A UE that transmits a PSCCH with SCI format 1-A using sidelink resource allocation mode 2 [TS 38.214] sets (A UE that transmits a PSCCH with SCI format 1-A using sidelink resource allocation mode 2 [TS 38.214] sets) | |
| - "Resource reservation period" as an index in *sl-ResourceReservePeriodList* corresponding to a reservation period provided by higher layers [TS 38.321], if the UE is provided *sl-MultiReserveResource* | |
| - the values of the frequency resource assignment field and the time resource assignment field as described in [TS 38.214] to indicate *N* resources from a set {*R*_{y}} of resources selected by higher layers as described in [TS 38.321] with *N* smallest slot indices *yᵢ* for 0 ≤ *i* ≤ *N* - 1 such that *y*₀ < *y*₁ < ··· < *y*_{*N*-1} ≤ *y*₀ + 31, where: | |
| | - *N =* min(*N*_{selected}, *N*_{max_reserve}), where *N*_{selected} is a number of resources in the set {*R*_{y}} with slot indices *yⱼ ,* 0 ≤ *j* ≤ *N*_{selected} - 1 , such that *y*₀ < *y*₁ < ··· < *y*_{*N*_{selected}-1} ≤ *y*₀ + 31 , and *N*_{max_reserve} is provided by *sl-MaxNumPerReserve* |
| | - each resource, from the set of {*R*_{y}} resources, corresponds to *L*_{subCH} contiguous sub-channels and a slot in a set of slots $\left\{t{′}_{y}^{SL}\right\}$, where *L*_{subCH} is the number of sub-channels available for PSSCH/PSCCH transmission in a slot |
| | *-* $\left(t{′}_{0}^{SL},t{′}_{1}^{SL},t{′}_{2}^{SL},…\right)$ is a set of slots in a sidelink resource pool [TS 38.214] |
| | - *y*₀ is an index of a slot where the PSCCH with SCI format 1-A is transmitted. |
| (The following information is transmitted by means of the SCI format 1-A): | |
| Priority - 3 bits as specified in clause 5.4.3.3 of [TS 23.287] and clause 5.22.1.3.1 of [TS 38.321]. | |
| - Frequency resource assignment - $\left⌈{log}_{2}\left(\frac{{N}_{subChannel}^{SL} \left({N}_{subChannel}^{SL}+1\right)}{2}\right)\right⌉$ bits when the value of the higher laye parameter *sl-MaxNumPerReserve* is configured to 2; otherwise $\left⌈{log}_{2}\left(\frac{{N}_{subChannel}^{SL} \left({N}_{subChannel}^{SL}+1\right) \left(2{N}_{subChannel}^{SL}+1\right)}{6}\right)\right⌉$ bits when the value of the higher layer parameter *sl-MaxNumPerReserve* is configured to 3, as defined in clause 8.1.5 of [TS 38.214]. | |
| - Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.5 of [TS 38.214]. | |
| - Resource reservation period $- \left⌈{log}_{2} {N}_{rsv _ period}\right⌉$ bits as defined in clause 16.4 of [TS 38.213], where *N*_{rsv_period} is the number of entries in the higher layer parameter *sl-ResourceReservePeriodList,* if higher layer parameter *sl-MultiReserveResource* is configured; 0 bit otherwise. | |
| - DMRS pattern - $\left⌈{log}_{2} {N}_{pattern}\right⌉$ bits as defined in clause 8.4.1.1.2 of [TS 38.211], where *N*ₚₐₜₜₑᵣₙ is the number of DMRS patterns configured by higher layer parameter *sl-PSSCH-DMRS-TimePatternList.* | |
| - 2^{nd}-stage SCI format - 2 bits as defined in Table 8.3.1.1-1. | |
| - Beta_offset indicator - 2 bits as provided by higher layer parameter *sl-BetaOffsets2ndSCI* and Table 8.3.1.1-2. | |
| - Number of DMRS port - 1 bit as defined in Table 8.3.1.1-3. | |
| - Modulation and coding scheme - 5 bits as defined in clause 8.1.3 of [TS 38.214]. | |
| - Additional MCS table indicator - as defined in clause 8.1.3.1 of [TS 38.214]: 1 bit if one MCS table configured by higher layer parameter *sl-Additional-MCS-Table*; 2 bits if two MCS tables are configured by higher layer parameter sl- *Additional-MCS-Table*; 0 bit otherwise. | is |
| - PSFCH overhead indication - 1 bit as defined clause 8.1.3.2 of [TS 38.214] if higher layer parameter *sl-PSFCH-Period* = 2 or 4; 0 bit otherwise. | |
| - Reserved - a number of bits as determined by higher layer parameter *sl-NumReservedBits,* with value set to zero. | |
| The following information is transmitted by means of the SCI format 2-A : | |
| - HARQ process number - 4 bits. | |
| - New data indicator - 1 bit. | |
| - Redundancy version - 2 bits as defined in Table 7.3.1.1.1-2. | |
| - Source ID - 8 bits as defined in clause 8.1 of [TS 38.214]. | |

- Destination ID - 16 bits as defined in clause 8.1 of [TS 38.214].
- HARQ feedback enabled/disabled indicator - 1 bit as defined in clause 16.3 of [TS 38.213].
- Cast type indicator - 2 bits as defined in Table 8.4.1.1-1 and in clause 8.1 of [TS 38.214].
- CSI request - 1 bit as defined in clause 8.2.1 of [TS 38.214] and in clause 8.1 of [TS 38.214].

The following information is transmitted by means of the SCI format2-B (The following information is transmitted by means of the SCI format 2-B):
- HARQ process number - 4 bits.
- New data indicator - 1 bit.
- Redundancy version - 2 bits as defined in Table 7.3.1.1.1-2.
- Source ID - 8 bits as defined in clause 8.1 of [TS 38.214].
- Destination ID - 16 bits as defined in clause 8.1 of [TS 38.214].
- HARQ feedback enabled/disabled indicator - 1 bit as defined in clause 16.3 of [TS 38.213].
- Zone ID - 12 bits as defined in clause 5.8.11 of [TS 38.331].
- Communication range requirement - 4 bits determined by higher layer parameter *sl-ZoneConfigMCR-Index.*

Various embodiments of FIGS. 6 to 12C correspond to a case where the sidelink remote UE is directly connected to a BS and is configured with mode1, or a case where the sidelink remote UE (configured with mode1 or mode2) is directly connected to the BS, the sidelink remote UE directly transmits, to the BS, a SL-BSR as a measurement report message for UL traffic flow control or UL traffic flow control assistance information.

In an embodiment of the present disclosure, the sidelink remote UE may transmit the SL-BSR to the BS via forwarding of the sidelink relay, and the sidelink relay may receive the SL-BSR of the sidelink remote UE. Based on the SL-BSR of the sidelink remote UE, the sidelink relay may transmit a message of pre-emptively requesting the BS for a UL transmission resource (pre-emptive BSR or relay pre-emptive BSR). In a case where the sidelink remote UE is in an RRC-connected state (RRC_CONNECTED), is connectable to the BS in a direct manner or via the sidelink relay, and is enabled to transmit a SL-BSR, and the sidelink relay is configured to relay-transmit the SL-BSR of the sidelink remote UE, when the sidelink relay receives the SL-BSR transmitted from the sidelink remote UE, the sidelink relay may determine that UL traffic is buffered in the sidelink remote UE, and may transmit, to the BS, a pre-emptive BSR or a relay pre-emptive BSR for pre-emptively requesting a UL resource for forwarding the UL traffic of the sidelink remote UE to the BS via a UL.

The SL-BSR that is relay-transmittable to the BS via the sidelink relay may use a separate logic channel identifier to be distinguished from a normal SL-BSR (directly transmitted/received between a UE and a BS). When the sidelink relay identifies a logic channel identifier indicating a relay-enabled SL-BSR, the sidelink relay may forward, to the BS, the SL-BSR received from the sidelink remote UE. When the sidelink relay identifies the logic channel identifier indicating the relay-enabled SL-BSR, the sidelink relay may transmit, to the BS, a pre-emptive BSR or a relay pre-emptive BSR for pre-emptively a UL resource.

In various embodiments of FIGS. 6 to 12C, in order to prevent a sidelink remote UE or a sidelink relay from performing an operation of excessively transmitting a sidelink relay traffic flow control measurement report message, a sidelink relay traffic flow control measurement report message transmission restriction timer (sl_relay_flow_control_report_restriction_timer) may be configured for the sidelink remote UE or the sidelink relay. The measurement report message transmission restriction timer may start (restart) when the sidelink relay or the sidelink remote UE transmits a sidelink relay traffic flow control measurement report message. While the timer is running (that is, is not expired), the sidelink relay or the sidelink remote UE does not transmit a sidelink relay traffic flow control measurement report message.

Even when it is determined that the triggering condition of the sidelink relay traffic flow control measurement report is satisfied with respect to [Table 1], if the measurement report message transmission restriction timer is running, the sidelink relay or the sidelink remote UE does not transmit a measurement report message. In another embodiment, while the measurement report message transmission restriction timer is running, when the sidelink relay or the sidelink remote UE receives a measurement report polling message, the sidelink relay or the sidelink remote UE does not stop the measurement report message transmission restriction timer and may transmit a sidelink relay traffic flow control measurement report message. In another embodiment, while the measurement report message transmission restriction timer is running, when the sidelink relay or the sidelink remote UE receives a measurement report polling message, the sidelink relay or the sidelink remote UE stops the measurement report message transmission restriction timer, may transmit a sidelink relay traffic flow control measurement report message, and may (re)start the measurement report message transmission restriction timer. In another embodiment, in a case where unicast connection is reconfigured between the sidelink relay and the sidelink remote UE while the measurement report message transmission restriction timer is running, the sidelink relay or the sidelink remote UE may stop the measurement report message transmission restriction timer.

Methods according to the claims of the present disclosure or the embodiments described in the specification may be implemented by hardware, software, or a combination of hardware and software.

When the methods are implemented by software, a computer-readable storage medium storing one or more programs (software modules) may be provided. The one or more programs stored in the computer-readable storage medium are configured to be executed by one or more processors in an electronic device. The one or more programs include instructions for allowing the electronic device to execute the methods according to the claims or the embodiments of the present disclosure.

The programs (e.g., software modules or software) may be stored in a random-access memory (RAM), a non-volatile memory including a flash memory, a read-only memory (ROM), an electrically erasable programmable read-only memory (EEPROM), a magnetic disc storage device, a compact disc-ROM (CD-ROM), a digital versatile disc (DVD), another optical storage device, a magnetic cassette, or a combination of some or all of the above. Also, each of the memories may include a plurality of memories.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may be connected through an external port to an apparatus for performing an embodiment of the present disclosure. Also, a separate storage device on a communication network may be connected to an apparatus for performing an embodiment of the present disclosure.

The computer-readable storage medium may be provided in the form of a non-transitory storage medium. Here, the term 'non-transitory storage medium' means that the storage medium is a tangible entity and does not include a signal (e.g., an electromagnetic wave), and the term does not distinguish that data is stored semi-permanently or temporarily on the storage medium. For example, the non-transitory storage medium may include a buffer in which data is temporarily stored.

According to an embodiment, a method according to various embodiments of the present disclosure may be provided in a computer program product. The computer program product may be traded between a seller and a purchaser as a commodity. The computer program product may be distributed in the form of a machine-readable storage medium (e.g., CD-ROM), or may be distributed online (e.g., downloaded or uploaded) through an application store (e.g., Play Store^{™}) or directly between two user devices (e.g., smart phones). For online distribution, at least a part of the computer program product (e.g., a downloadable app.) may be temporarily generated or be at least temporarily stored in a machine-readable storage medium such as a manufacturer's server, an application store's server, or a memory of a relay server.

In detailed embodiments of the present disclosure, elements included in the present disclosure have been expressed as singular or plural according to the detailed embodiments. However, singular or plural representations are selected appropriately for the sake of convenience of explanation, the present disclosure is not limited to the singular or plural elements, and even expressed as a singular element, it may be composed of plural elements, and vice versa.

Although specific embodiments are described in the detailed description of the present disclosure, various modifications may be made without departing from the scope of the present disclosure.

## Claims

1. A method performed by a user equipment, UE, for sidelink, SL, communication, the method comprising:
transmitting traffic status information about SL uplink and SL downlink;
obtaining scheduling information for SL uplink traffic control and SL downlink traffic resource allocation determined based on the traffic status information; and
controlling traffic flow, based on the scheduling information,
wherein the UE is a SL remote UE or a SL relay UE, wherein the method further comprises identifying whether a report condition for transmitting the traffic status information is satisfied,
wherein, as a result of the identifying, when the report condition is satisfied, the traffic status information is transmitted, wherein the method is **characterized in that** the report condition comprises at least one of a case where a channel use ratio of the UE and a base station is greater than a second threshold value, or a case where a latency requirement of the UE is not satisfied.

2. The method of claim 1, wherein the traffic status information comprises at least one of buffer status information of the UE, status information of a channel between the UE and a base station, or information about latency between the UE and the base station.

3. The method of claim 1, further comprising obtaining, from a base station, a request for the traffic status information.

4. The method of claim 1, wherein the traffic status information is transmitted via at least one of a buffer status report, BSR, message, a radio resource control, RRC, message, adaptation sublayer control signaling, or a medium access control control element, MAC CE, message.

5. The method of claim 1, wherein the scheduling information comprises uplink scheduling information of the SL relay UE, downlink scheduling information of the SL relay UE, and uplink scheduling information of the SL remote UE.

6. The method of claim 1, further comprising identifying a mode of the SL scheduling,
wherein the traffic status information is signaled, based on a result of the identifying.

7. A user equipment, UE, for sidelink, SL, communication, the UE comprising:
a transceiver (310); and
at least one processor (330) coupled with the transceiver (310),
wherein the at least one processor (330) is configured to
transmit traffic status information about SL uplink and SL downlink,
obtain scheduling information for SL uplink traffic control and SL downlink traffic control, which is determined based on the traffic status information, and
control traffic flow, based on the scheduling information, and
wherein the UE is a SL remote UE or a SL relay UE, wherein the at least one processor (330) is further configured to identify whether a report condition for transmitting the traffic status information is satisfied,
wherein, as a result of the identifying, when the report condition is satisfied, the traffic status information is transmitted, wherein the UE is **characterized in that** the report condition comprises at least one of a case where a channel use ratio of the UE and a base station is greater than a second threshold value, or a case where a latency requirement of the UE is not satisfied.

8. A method performed by a base station for sidelink, SL, communication, the method comprising:
receiving, from a user equipment, UE, traffic status information about SL uplink and SL downlink;
determining scheduling information for SL uplink traffic control and SL downlink traffic resource allocation based on the traffic status information; and
transmitting, to the UE, the scheduling information,
wherein the UE is a SL remote UE or a SL relay UE, wherein
the traffic status information is received when the UE has identified that a traffic status report condition is satisfied, and wherein the method is **characterized in that** the traffic status report condition comprises at least one of a case where a channel use ratio of the UE and the base station is greater than a second threshold value, or a case where a latency requirement of the UE is not satisfied.

9. The method of claim 8, wherein the traffic status information comprises at least one of buffer status information of the UE, status information of a channel between the UE and the base station, or information about latency between the UE and the base station.

10. The method of claim 8, further comprising transmitting, to the UE, a request for the traffic status information.

11. The method of claim 8, wherein the traffic status information is received via at least one of a buffer status report, BSR, message, a radio resource control, RRC, message, adaptation sublayer control signaling, or a medium access control control element, MAC CE, message.

12. A base station for sidelink, SL, communication, the base station comprising:
a transceiver; and
at least one processor (240) coupled with the transceiver,
wherein the at least one processor (240) is configured to
receive, from a user equipment, UE, traffic status information about SL uplink and SL downlink,
determine scheduling information for SL uplink traffic control and SL downlink traffic resource allocation based on the traffic status information, and
transmit, to the UE, the scheduling information,
wherein the UE is a SL remote UE or a SL relay UE, wherein
the traffic status information is received when the UE has identified that a traffic status report condition is satisfied, and wherein the base station is **characterized in that** the traffic status report condition comprises at least one of a case where a channel use ratio of the UE and the base station is greater than a second threshold value, or a case where a latency requirement of the UE is not satisfied.

## Patentansprüche

1. Verfahren, das durch eine Benutzereinrichtung, UE, für Sidelink-, SL-, Kommunikation durchgeführt wird, wobei das Verfahren Folgendes umfasst:
Übertragen von Verkehrsstatusinformationen über SL-Uplink und SL-Downlink;
Erhalten von Planungsinformationen zur SL-Uplink-Verkehrssteuerung und Ressourcenzuteilung für SL-Downlink-Verkehr, die auf Grundlage der Verkehrsstatusinformationen bestimmt werden; und
Steuern eines Verkehrsflusses auf Grundlage der Planungsinformationen,
wobei die UE eine entfernte SL-UE oder eine SL-Relais-UE ist,
wobei das Verfahren ferner Identifizieren, ob eine Berichtsbedingung zum Übertragen der Verkehrsstatusinformationen erfüllt ist, umfasst,
wobei infolge des Identifizierens, wenn die Berichtsbedingung erfüllt ist, die Verkehrsstatusinformationen übertragen werden, wobei das Verfahren **dadurch gekennzeichnet ist, dass** die Berichtsbedingung mindestens eines von einem Fall, in dem ein Kanalnutzungsverhältnis der UE und einer Basisstation größer als ein zweiter Schwellenwert ist, oder einem Fall, in dem eine Latenzanforderung der UE nicht erfüllt ist, umfasst.

2. Verfahren nach Anspruch 1, wobei die Verkehrsstatusinformationen mindestens eines von Pufferstatusinformationen der UE, Statusinformationen eines Kanals zwischen der UE und einer Basisstation oder Informationen über Latenz zwischen der UE und der Basisstation umfassen.

3. Verfahren nach Anspruch 1, ferner umfassend Erhalten, von einer Basisstation, einer Anfrage nach den Verkehrsstatusinformationen.

4. Verfahren nach Anspruch 1, wobei die Verkehrsstatusinformationen über mindestens eines von einer Nachricht mit Pufferstatusbericht, BSR, einer Nachricht einer Funkressourcensteuerung, RRC, Anpassungsunterschicht-Steuersignalisierung oder einer Nachricht eines Medienzugriffssteuerelements, MAC-CE, übertragen werden.

5. Verfahren nach Anspruch 1, wobei die Planungsinformationen Uplink-Planungsinformationen der SL-Relais-UE, Downlink-Planungsinformationen der SL-Relais-UE und Downlink-Planungsinformationen der entfernten SL-UE umfassen.

6. Verfahren nach Anspruch 1, ferner umfassend Identifizieren eines Modus der SL-Planung,
wobei die Verkehrsstatusinformationen auf Grundlage eines Ergebnisses des Identifizierens signalisiert werden.

7. Benutzereinrichtung, UE, für Sidelink-, SL-, Kommunikation, wobei die UE Folgendes umfasst:
einen Sendeempfänger (310); und
mindestens einen Prozessor (330), der mit dem Sendeempfänger (310) gekoppelt ist,
wobei der mindestens eine Prozessor (330) zu Folgendem ausgelegt ist:
Übertragen von Verkehrsstatusinformationen über SL-Uplink und SL-Downlink,
Erhalten von Planungsinformationen zur SL-Uplink-Verkehrssteuerung und SL-Downlink-Verkehrssteuerung, die auf Grundlage der Verkehrsstatusinformationen bestimmt werden, und
Steuern eines Verkehrsflusses auf Grundlage der Planungsinformationen, und
wobei die UE eine entfernte SL-UE oder eine SL-Relais-UE ist,
wobei der mindestens eine Prozessor (330) ferner dazu ausgelegt ist, zu identifizieren, ob eine Berichtsbedingung zum Übertragen der Verkehrsstatusinformationen erfüllt ist,
wobei infolge des Identifizierens, wenn die Berichtsbedingung erfüllt ist, die Verkehrsstatusinformationen übertragen werden, wobei die UE **dadurch gekennzeichnet ist, dass** die Berichtsbedingung mindestens eines von einem Fall, in dem ein Kanalnutzungsverhältnis der UE und einer Basisstation größer als ein zweiter Schwellenwert ist, oder einem Fall, in dem eine Latenzanforderung der UE nicht erfüllt ist, umfasst.

8. Verfahren, das durch eine Basisstation für Sidelink-, SL-, Kommunikation durchgeführt wird, wobei das Verfahren Folgendes umfasst:
Empfangen, von einer Benutzereinrichtung, UE, von Verkehrsstatusinformationen über SL-Uplink und SL-Downlink;
Bestimmen von Planungsinformationen zur SL-Uplink-Verkehrssteuerung und Ressourcenzuteilung für SL-Downlink-Verkehr auf Grundlage der Verkehrsstatusinformationen; und
Übertragen, an die UE, der Planungsinformationen,
wobei die UE eine entfernte SL-UE oder eine SL-Relais-UE ist,
wobei die Verkehrsstatusinformationen empfangen werden, wenn die UE identifiziert hat, dass eine Verkehrsstatusberichtsbedingung erfüllt ist, und
wobei das Verfahren **dadurch gekennzeichnet ist, dass** die Verkehrsstatusberichtsbedingung mindestens eines von einem Fall, in dem ein Kanalnutzungsverhältnis der UE und der Basisstation größer als ein zweiter Schwellenwert ist, oder einem Fall, in dem eine Latenzanforderung der UE nicht erfüllt ist, umfasst.

9. Verfahren nach Anspruch 8, wobei die Verkehrsstatusinformationen mindestens eines von Pufferstatusinformationen der UE, Statusinformationen eines Kanals zwischen der UE und der Basisstation oder Informationen über Latenz zwischen der UE und der Basisstation umfassen.

10. Verfahren nach Anspruch 8, ferner umfassend Übertragen, an die UE, einer Anfrage nach den Verkehrsstatusinformationen.

11. Verfahren nach Anspruch 8, wobei die Verkehrsstatusinformationen über mindestens eines von einer Nachricht mit Pufferstatusbericht, BSR, einer Nachricht einer Funkressourcensteuerung, RRC, Anpassungsunterschicht-Steuersignalisierung oder einer Nachricht eines Medienzugriffssteuerelements, MAC-CE, empfangen werden.

12. Basisstation für Sidelink-, SL-, Kommunikation, wobei die Basisstation Folgendes umfasst:
einen Sendeempfänger; und
mindestens einen Prozessor (240), der mit dem Sendeempfänger gekoppelt ist,
wobei der mindestens eine Prozessor (240) zu Folgendem ausgelegt ist:
Empfangen, von einer Benutzereinrichtung, UE, von Verkehrsstatusinformationen über SL-Uplink und SL-Downlink,
Bestimmen von Planungsinformationen zur SL-Uplink-Verkehrssteuerung und Ressourcenzuteilung für SL-Downlink-Verkehr auf Grundlage der Verkehrsstatusinformationen, und
Übertragen, an die UE, der Planungsinformationen,
wobei die UE eine entfernte SL-UE oder eine SL-Relais-UE ist,
wobei die Verkehrsstatusinformationen empfangen werden, wenn die UE identifiziert hat, dass eine Verkehrsstatusberichtsbedingung erfüllt ist, und
wobei die Basisstation **dadurch gekennzeichnet ist, dass** die Verkehrsstatusberichtsbedingung mindestens eines von einem Fall, in dem ein Kanalnutzungsverhältnis der UE und der Basisstation größer als ein zweiter Schwellenwert ist, oder einem Fall, in dem eine Latenzanforderung der UE nicht erfüllt ist, umfasst.

## Revendications

1. Procédé mis en œuvre par un équipement utilisateur, UE, pour la communication de liaison latérale, SL, le procédé comprenant :
la transmission d'informations d'état de trafic sur liaison montante SL et liaison descendante SL ;
l'obtention d'informations de programmation pour la commande de trafic de liaison montante SL et l'allocation de ressources de trafic de liaison descendante SL déterminées à partir des informations d'état de trafic ; et
la commande du flux de trafic, à partir des informations de programmation,
dans lequel l'UE est un UE distant SL ou un UE relais SL,
dans lequel le procédé comprend en outre l'identification du remplissage ou non d'une condition de rapport pour la transmission des informations d'état de trafic,
dans lequel, à la suite de l'identification, lorsque la condition de rapport est remplie, les informations d'état de trafic sont transmises, le procédé étant **caractérisé en ce que** la condition de rapport comprend au moins l'un parmi un cas où un taux d'utilisation de canal de l'UE et d'une station de base est supérieur à une deuxième valeur de seuil, ou un cas où une exigence de latence de l'UE n'est pas remplie.

2. Procédé selon la revendication 1, dans lequel les informations d'état de trafic comprennent au moins des informations d'état de tampon de l'UE, des informations d'état d'un canal entre l'UE et une station de base, ou des informations de latence entre l'UE et la station de base.

3. Procédé selon la revendication 1, comprenant en outre l'obtention, de la part d'une station de base, d'une requête d'informations d'état de trafic.

4. Procédé selon la revendication 1, dans lequel les informations d'état de trafic sont transmises par au moins l'un(e) parmi un message de rapport d'état de tampon, BSR, un message de commande de ressource radio, RRC, une signalisation de commande de sous-couche d'adaptation, ou un message d'un élément de commande d'accès au support, MAC CE.

5. Procédé selon la revendication 1, dans lequel les informations de programmation comprennent des informations de programmation de liaison montante de l'UE relais SL, des informations de programmation de liaison descendante de l'UE relais SL et des informations de programmation de liaison montante de l'UE distant SL.

6. Procédé selon la revendication 1, comprenant en outre l'identification d'un mode de la programmation SL,
dans lequel les informations d'état de trafic sont signalées à partir d'un résultat de l'identification.

7. Équipement utilisateur, UE, pour la communication de liaison latérale, SL, l'UE comprenant :
un émetteur-récepteur (310) ; et
au moins un processeur (330) couplé à l'émetteur/récepteur (310),
dans lequel ledit au moins un processeur (330) est configuré de manière à
transmettre des informations d'état de trafic sur liaison montante SL et liaison descendante SL,
obtenir des informations de programmation pour la commande de trafic de liaison montante SL et la commande de trafic de liaison descendante SL déterminées à partir des informations d'état de trafic, et
commander le flux de trafic, à partir des informations de programmation, et
dans lequel l'UE est un UE distant SL ou un UE relais SL,
dans lequel ledit au moins un processeur (330) est en outre configuré de manière à identifier si une condition de rapport pour la transmission des informations d'état de trafic est remplie,
dans lequel, à la suite de l'identification, lorsque la condition de rapport est remplie, les informations d'état de trafic sont transmises, l'UE étant **caractérisé en ce que** la condition de rapport comprend au moins l'un parmi un cas où un taux d'utilisation de canal de l'UE et d'une station de base est supérieur à une deuxième valeur de seuil, ou un cas où une exigence de latence de l'UE n'est pas remplie.

8. Procédé mis en œuvre par une station de base pour la communication de liaison latérale, SL, le procédé comprenant :
la réception, de la part d'un équipement utilisateur, UE, d'informations d'état de trafic sur liaison montante SL et liaison descendante SL ;
la détermination d'informations de programmation pour la commande de trafic de liaison montante SL et l'allocation de ressources de trafic de liaison descendante SL à partir des informations d'état de trafic ; et
la transmission, à l'UE, des informations de programmation,
dans lequel l'UE est un UE distant SL ou un UE relais SL,
dans lequel
les informations d'état de trafic sont reçues lorsque l'UE a identifié qu'une condition de rapport d'état de trafic est remplie, et
dans lequel le procédé est **caractérisé en ce que** la condition de rapport d'état de trafic comprend au moins l'un parmi un cas où un taux d'utilisation de canal de l'UE et de la station de base est supérieur à une deuxième valeur de seuil, ou un cas où une exigence de latence de l'UE n'est pas remplie.

9. Procédé selon la revendication 8, dans lequel les informations d'état de trafic comprennent au moins des informations d'état de tampon de l'UE, des informations d'état d'un canal entre l'UE et la station de base, ou des informations de latence entre l'UE et la station de base.

10. Procédé selon la revendication 8, comprenant en outre la transmission, à l'UE, d'une requête d'informations d'état de trafic.

11. Procédé selon la revendication 8, dans lequel les informations d'état de trafic sont reçues par au moins l'un(e) parmi un message de rapport d'état de tampon, BSR, un message de commande de ressource radio, RRC, une signalisation de commande de sous-couche d'adaptation, ou un message d'un élément de commande d'accès au support, MAC CE.

12. Station de base pour la communication de liaison latérale, SL, la station de base comprenant :
un émetteur-récepteur ; et
au moins un processeur (240) couplé à l'émetteur/récepteur,
dans laquelle ledit au moins un processeur (240) est configuré de manière à
recevoir, de la part d'un équipement utilisateur, UE, des informations d'état de trafic sur liaison montante SL et liaison descendante SL,
déterminer des informations de programmation pour la commande de trafic de liaison montante SL et l'allocation de ressources de trafic de liaison descendante SL à partir des informations d'état de trafic, et
transmettre, à l'UE, les informations de programmation,
dans laquelle l'UE est un UE distant SL ou un UE relais SL,
dans laquelle
les informations d'état de trafic sont reçues lorsque l'UE a identifié qu'une condition de rapport d'état de trafic est remplie, et
dans laquelle la station de base est **caractérisé en ce que** la condition de rapport d'état de trafic comprend au moins l'un parmi un cas où un taux d'utilisation de canal de l'UE et de la station de base est supérieur à une deuxième valeur de seuil, ou un cas où une exigence de latence de l'UE n'est pas remplie.
